# EUROPÄISCHE PATENTSCHRIFT

(11) **EP 3 636 406 B1**
(45) Veröffentlichungstag und Bekanntmachung des Hinweises auf die Patenterteilung: **28.04.2021**
(21) Anmeldenummer: 18199329.6
(22) Anmeldetag: 09.10.2018
(51) Int. Cl.: B29C 45/00, C08G 69/14, C08G 69/26, C08L 77/06, B29K 77/00

(54) **SCHLAGZÄHMODIFIZIERTE POLYAMID-FORMMASSEN**
TOUGHENED POLYAMIDE MOULDING MASSES
MASSES DE FORMAGE EN POLYAMIDE À RÉSILIENCE MODIFIÉE

(43) Veröffentlichungstag der Anmeldung: 15.04.2020
(73) Patentinhaber: EMS-CHEMIE AG, 7013 Domat/Ems (CH)
(72) Erfinder: Wiedemann, Thomas, 7013 Domat/EMS (CH)
(74) Vertreter: Pfenning, Meinig & Partner mbB

(56) Entgegenhaltungen:
- EP-A1- 1 826 229
- US-A1- 2017 306 149

## Beschreibung

Die vorliegende Erfindung betrifft schlagzähmodifizierte Polyamid-Formmassen, welche neben einem spezifischen amorphen Polyamid und einem funktionalisierten Styrol-Butadien-Styrol-Triblockcopolymeren als Schlagzähmodifikator gegebenenfalls weitere spezifische teilkristalline Polyamide und Zusatzstoffe enthalten. Ebenso betrifft die Erfindung die Verwendung dieser Polyamid-Formmassen zur Herstellung von Formkörpern.

Polyamide sind heutzutage weit verbreitet als Strukturelemente für den Innen- und Außenbereich, insbesondere im Bereich von Gehäusen, optischen Geräten und Displays aber auch im Bereich von Haushaltsgeräten und Sportartikeln. Dies ist im Wesentlichen auf die guten mechanischen Eigenschaften der Polyamide zurückzuführen. Dies ist für die gute Verarbeitbarkeit der Formmassen wichtig, um unterschiedlichste Formgebungen zu ermöglichen. Gleichzeitig ist es aber auch wichtig, gute optische Eigenschaften der Formmassen zu ermöglichen, insbesondere im Hinblick auf die Transparenz, die auch nach längerer Nutzung erhalten bleiben sollte.

Aus der EP 3 336 131 A1 ist eine Polyamid-Formmasse basierend auf einem amorphen Polyamid mit guter Verarbeitbarkeit bei ebenfalls guten optischen Eigenschaften bekannt. Das amorphe Polyamid kann dabei auch mit aliphatischen Polyamiden modifiziert sein.

Aus der EP 2 778 190 B1 sind transparente Blends aus Polyamiden der Gruppe PA MACM12, PA PACM12, PA MACM10, PA PACM10, PA MACM14 und PA PACM14, deren Mischungen und Copolyamiden mit einem funktionalisierten Styrol-Ethylen/Butylen-Styrol-Blockcopolymer (SEBS) als Schlagzähmodifikator bekannt, die eine hohe Kerbschlagzähigkeit aufweisen.

Ausgehend davon bestand die Aufgabe, eine Polyamid-Formmasse bereitzustellen, die neben einer hohen Steifigkeit, insbesondere ausgedrückt durch den Zug-E-Modul, eine hohe Zähigkeit, insbesondere ausgedrückt durch die Kerbschlagzähigkeit und sehr gute optische Eigenschaften, insbesondere ausgedrückt durch den Haze und die Lichttransmission, aufweist.

Diese Aufgabe wird durch die Polyamid-Formmasse mit den Merkmalen des Anspruchs 1 gelöst. Die weiteren abhängigen Ansprüche zeigen vorteilhafte Weiterbildungen auf.

Erfindungsgemäß wird eine Polyamid-Formmasse enthaltend oder bestehend aus den folgenden Komponenten (A) bis (D) bereitgestellt:
(A) 55 bis 97 Gew.-% mindestens eines amorphen Copolyamids gebildet aus den Monomeren (a1) bis (a4):
   (a1) 25 bis 40 Mol-% mindestens eines acyclischen, aliphatischen
   Diamins mit 6 bis 10 Kohlenstoffatomen;
   (a2) 10 bis 25 Mol-% mindestens eines cycloaliphatischen Diamins mit 6 bis 36 Kohlenstoffatomen;
   (a3) 20 bis 40 Mol-% mindestens einer aromatischer Dicarbonsäure;
   (a4) 10 bis 30 Mol-% mindestens einer acyclischen, aliphatischen Dicarbonsäure mit 8 bis 16 Kohlenstoffatomen;
   wobei sich die Anteile der Monomere (a1) und (a2) auf die Summe der eingesetzten Diamine beziehen und sich auf 50 Mol-% ergänzen und die Anteile der Monomere (a3) und (a4) auf die Summe der eingesetzten Dicarbonsäuren beziehen und sich auf 50 Mol-% ergänzen;
(B) 3 bis 22 Gew.-% mindestens eines funktionalisierten Styrol-Butadien-Styrol Triblockcopolymeren;
(C) 0 bis 15 Gew.-% mindestens eines aliphatischen teilkristallinen Polyamids, ausgewählt aus der Gruppe bestehend aus PA 6/12 und PA 612; und
(D) 0 bis 8 Gew.-% mindestens eines Zusatzstoffes;
   wobei sich die Mengenanteile der Komponenten (A) bis (D) auf 100 Gew.-% ergänzen.

### Begriffsdefinitionen

### • Schreibweisen und Abkürzungen für Polyamide und deren Monomere

Im Sinne der vorliegenden Erfindung wird unter dem Begriff "Polyamid" (Abkürzung PA) ein Oberbegriff verstanden, dieser umfasst Homopolyamide und Copolyamide. Die gewählten Schreibweisen und Abkürzungen für Polyamide und deren Monomere entsprechen den in der ISO-Norm 16396-1 (2015, (D)) festgelegten. Die darin verwendeten Abkürzungen werden im Folgenden synonym zu den IUPAC Namen der Monomere verwendet.

### • Allgemeines zu den Mengenangaben

Die Polyamid-Formmassen gemäß der vorliegenden Erfindung enthalten oder bestehen aus den Komponenten (A) und (B) sowie gegebenenfalls (C) und/oder (D), es gilt dabei die Maßgabe, dass sich die Komponenten (A), (B), (C) und (D) in Summe auf 100 Gew.-% ergänzen. Die festgelegten Bereiche der Mengenangaben für die einzelnen Komponenten (A), (B), (C) und (D) sind so zu verstehen, dass innerhalb der vorgegebenen Bereiche eine willkürliche Menge für jede der Einzelkomponenten ausgewählt werden kann, sofern die Maßgabe erfüllt wird, dass die Summe aller Komponenten (A) bis (D) 100 Gew.-% ergibt.

### • Funktionalisierung von Komponente (B)

Komponente (B) kann durch Copolymerisation oder durch Pfropfen funktionalisiert werden. Im Sinne der vorliegenden Erfindung meint Funktionalisieren durch Copolymerisation den Einbau der funktionalisierenden Verbindung in die Hauptkette von Komponente (B) als Bestandteil dieser Hauptkette. Unter der Funktionalisierung von Komponente (B) durch Pfropfen wird hingegen das Anbinden der funktionalisierenden Verbindung an die Hauptkette verstanden, so dass Seitenketten entstehen.

### • Teilkristalline Polyamide

Im Sinne der vorliegenden Erfindung sind teilkristalline Polyamide solche Polyamide, die einen Schmelzpunkt besitzen.

Im Sinne der vorliegenden Erfindung sind teilkristalline Polyamide solche Polyamide, die in der dynamischen Differenz-Kalorimetrie (engl. Differential Scanning Calorimetry, DSC) nach ISO 11357-3 (2013) bei einer Aufheizrate von 20 K/min bevorzugt eine Schmelzwärme von mehr als 4 J/g aufweisen.

### Polyamid-Formmasse

Die erfindungsgemäße Polyamid-Formmasse enthält die Komponenten (A) und (B) und gegebenenfalls die Komponente (C) und/oder die Komponente (D) oder besteht aus diesen.

Gemäß einer bevorzugten Ausführungsform der vorliegenden Erfindung liegt der Anteil von Komponente (A) in der Polyamid-Formmasse im Bereich von 61 bis 97 Gew.-%, bevorzugt von 67 bis 93 Gew.-% und besonders bevorzugt von 77 bis 90,9 Gew.%, bezogen auf das Gesamtgewicht der Polyamid-Formmasse.

Nach einer weiteren bevorzugten Ausführungsform vorliegender Erfindung liegt der Anteil von Komponente (B) in der Polyamid-Formmasse im Bereich von 3 bis 20 Gew.-%, bevorzugt von 4 bis 17 Gew.-% und besonders bevorzugt von 4 bis 10 Gew.%, bezogen auf das Gesamtgewicht der Polyamid-Formmasse.

Eine weitere bevorzugte Ausführungsform sieht vor, dass der Anteil von Komponente (C) in der Polyamid-Formmasse im Bereich von 0 bis 13 Gew.-%, bevorzugt von 3 bis 12 Gew.-% und besonders bevorzugt von 5 bis 10 Gew.-%, bezogen auf das Gesamtgewicht der Polyamid-Formmasse liegt.

Eine weitere bevorzugte Ausführungsform sieht vor, dass der Anteil von Komponente (D) in der Polyamid-Formmasse im Bereich von 0 bis 6 Gew.-%, bevorzugt von 0 bis 4 Gew.-% und besonders bevorzugt von 0,1 bis 3 Gew.-%, bezogen auf das Gesamtgewicht der Polyamid-Formmasse liegt.

Der an einem aus der Polyamid-Formmasse hergestellten Formkörper (2 mm dicke Platten mit Breite und Länge: 60 x 60 mm) nach ASTM D1003 gemessene Haze der Polyamid-Formmasse beträgt maximal 20 %, bevorzugt maximal 15 % und besonders bevorzugt maximal 10 %.

Die an einem aus der Polyamid-Formmasse hergestellten Formkörper (2 mm dicke Platten mit Breite und Länge: 60 x 60 mm) nach ASTM D1003 gemessene Lichttransmission beträgt mindestens 80 %, bevorzugt mindestens 85 % und besonders bevorzugt mindestens 90 %.

Ein aus der Polyamid-Formmasse hergestellter Formkörper weist vorzugsweise einen Zug-E-Modul bestimmt nach ISO 527 von mindestens 1500 MPa, bevorzugt mindestens 1700 MPa, besonders bevorzugt mindestens 1800 MPa auf.

Ein aus der Polyamid-Formmasse hergestellter Formkörper weist vorzugsweise eine Kerbschlagzähigkeit bestimmt nach DIN EN ISO 179/2eA von mindestens 18 kJ/m², bevorzugt 21 kJ/m² auf.

Gemäß einer bevorzugten Ausführungsform der vorliegenden Erfindung ist die erfindungsgemäße Polyamid-Formmasse frei von Glasfasern.

In einer besonders bevorzugten Ausführungsform ist die erfindungsgemäße Polyamid-Formmasse frei von faserförmigen Füllstoffen.

Gemäß einer bevorzugten Ausführungsform besteht die Komponente (A) aus genau einem Copolyamid und die Komponente (B) aus genau einem Schlagzähmodifikator.

Gemäß einer bevorzugten Ausführungsform besteht die Komponente (A) aus genau einem Copolyamid, die Komponente (B) aus genau einem Schlagzähmodifikator und die Komponente (C) aus genau einem aliphatischen, teilkristallinen Polyamid.

### Komponente (A)

Die Komponente (A) besteht aus mindestens einem amorphen Copolyamid gebildet aus den Monomeren (a1) bis (a4):
(a1) 25 bis 40 Mol-% mindestens eines acyclischen, aliphatischen Diamins mit 6 bis 10 Kohlenstoffatomen;
(a2) 10 bis 25 Mol-% mindestens eines cycloaliphatischen Diamins mit 6 bis 36 Kohlenstoffatomen;
(a3) 20 bis 40 Mol-% mindestens einer aromatischer Dicarbonsäure;
(a4) 10 bis 30 Mol-% mindestens einer acyclischen, aliphatischen Dicarbonsäure mit 8 bis 16 Kohlenstoffatomen;
wobei sich die Anteile der Monomere (a1) und (a2) auf die Summe der eingesetzten Diamine beziehen und sich auf 50 Mol-% ergänzen und die Anteile der Monomere (a3) und (a4) auf die Summe der eingesetzten Dicarbonsäuren beziehen und sich auf 50 Mol-% ergänzen.

Gemäß einer bevorzugten Ausführungsform vorliegender Erfindung handelt es sich beim Monomer (a1) um ein lineares oder verzweigtes Diamin mit 6 bis 8 Kohlenstoffatomen, besonders bevorzugt um 1,6-Hexamethylendiamin und/oder 2-Methyl-1,5-Pentandiamin.

Das Monomer (a2) ist vorzugsweise ein cycloaliphatisches Diamin mit 12 bis 20 Kohlenstoffatomen, welches bevorzugt ausgewählt ist aus der Gruppe bestehend aus Bis-(4-amino-3-methyl-cyclohexyl)-methan (MACM), Bis-(4-amino-cyclohexyl)-methan (PACM), 2,2-Bis-(4-amino-cyclohexyl)-propan (PACP), 2,2-Bis-(4-amino-3-methyl-cyclohexyl)-propan (MACP), Bis-(4-Amino-3-ethyl-cyclohexyl)-methan (EACM), 2,2-Bis-(4-amino-3-ethyl-cyclohexyl)-propan (EACP), Bis-(4-Amino-3,5-dimethy-cyclohexyl)-methan (TMACM), 2,2-Bis-(4-amino-3,5-dimethy-cyclohexyl)-propan (TMACP) und Mischungen davon, wobei Bis-(4-amino-3-methyl-cyclohexyl)-methan (MACM), Bis-(4-aminocyclohexyl)-methan (PACM) und Mischungen davon besonders bevorzugt sind.

Das Monomer (a3) ist vorzugsweise eine aromatische Dicarbonsäure mit 6 bis 36 Kohlenstoffatomen ist, die bevorzugt ausgewählt ist aus der Gruppe bestehend aus Terephthalsäure (TPS), Naphthalindicarbonsäure (NDA), einschliesslich 1,5-Naphthalindicarbonsäure und 2,6-Naphthalindicarbonsäure, Isophthalsäure (IPS), Biphenyl-dicarbonsäuren, besonders bevorzugt Biphenyl-2,2'-dicarbonsäure, 4,4'-Diphenyldicarbonsäure, 3,3'-Diphenyldicarbonsäure, 4,4'-Diphenyl-etherdicarbonsäure, 4,4'-Diphenylmethandicarbonsäure und 4,4'-Diphenylsulfondicarbonsäure, 1,5-Anthracendicarbonsäure, p-Terphenylen-4,4"-dicarbonsäure und 2,5-Pyridindicarbonsäure und Mischungen davon, wobei Terephthalsäure und Isophthalsäure und Mischungen davon höchst bevorzugt sind.

Das Monomer (a4) ist vorzugsweise eine acyclische, lineare oder verzweigte aliphatische Dicarbonsäure mit 10 bis 14 Kohlenstoffatomen, die bevorzugt ausgewählt ist aus der Gruppe bestehend aus Decandisäure, Undecandisäure, Dodecandisäure, Tridecandisäure, Tetradecandisäure und Mischungen davon, wobei besonders bevorzugt Dodecandisäure und höchst bevorzugt ausschließlich Dodecandisäure eingesetzt wird.

Als Monomer (a3) kann vorzugsweise eine Mischung aus Terephthalsäure und Isophthalsäure eingesetzt werden, bevorzugt in einem molaren Verhältnis von 2:1 bis 1:2, insbesondere in einem Verhältnis von 1,5:1 bis 1:1,5, wobei höchst bevorzugt eine äquimolare Mischung aus Terephthalsäure und Isophthalsäure eingesetzt wird.

Der Anteil an Monomer (a1) im Copolyamid liegt vorzugsweise im Bereich von 27,5 bis 40 Mol-%, bevorzugt im Bereich von 30 bis 38,5 Mol-% und/oder der Anteil an Monomer (a2) im Copolyamid liegt vorzugsweise im Bereich von 10 bis 22,5 Mol-% und besonders bevorzugt im Bereich von 11,5 bis 20 Mol-%, wobei sich die Anteile der Monomere (a1) und (a2) auf die Summe der eingesetzten Diamine beziehen und auf 50 Mol-% ergänzen.

Der Anteil an Monomer (a3) im Copolyamid liegt vorzugsweise im Bereich von 25 bis 40 Mol-%, bevorzugt im Bereich von 30 bis 37,5 Mol-% und/oder der Anteil an Monomer (a4) im Copolyamid liegt vorzugsweise im Bereich von 10 bis 25 Mol-%, und besonders bevorzugt im Bereich von 12,5 bis 20 Mol-% liegt, wobei sich die Anteile der Monomere (a3) und (a4) auf die Summe der eingesetzten Dicarbonsäuren beziehen und sich auf 50 Mol-% ergänzen.

Gemäß einer weiteren bevorzugten Ausführungsform ist
- das Monomer (a1) ausgewählt als 1,6-Hexamethylendiamin;
- das Monomer (a2) ausgewählt aus der Gruppe bestehend aus Bis-(4-amino-3-methyl-cyclohexyl)-methan (MACM), Bis-(4-aminocyclohexyl)-methan (PACM) und Mischungen davon, vorzugsweise als ausschließlich Bis-(4-amino-3-methyl-cyclohexyl)-methan MACM;
- das Monomer (a3) ausgewählt aus der Gruppe bestehend aus Terephthalsäure, Isophthalsäure und Mischung davon, vorzugsweise eine Mischung in einem Verhältnis von 1.5:1 bis 1:1.5, insbesondere vorzugsweise eine äquimolare Mischung;
- das Monomer (a4) ausgewählt als Dodecandisäure.

Dabei sind bevorzugt die Anteile der Monomere wie folgt ausgewählt:
- (a1) im Bereich von 30 bis 37,5 Mol-%;
- (a2) im Bereich von 12,5 bis 20 Mol-%;
- (a3) im Bereich von 30 bis 37,5 Mol-%;
- (a4) im Bereich von 12,5 bis 20 Mol-%;
wobei sich die Anteile der Monomere (a1) und (a2) auf die Summe der eingesetzten Diamine beziehen und sich auf 50 Mol-% ergänzen und sich die Anteile der Monomere (a3) und (a4) auf die Summe der eingesetzten Dicarbonsäuren beziehen und sich auf 50 Mol-% ergänzen.

Dabei ist es generell bevorzugt, dass im Rahmen von Komponente (A) keine Bausteine auf Lactam- oder Aminosäure-Basis eingesetzt werden. Komponente (A) ist also im Wesentlichen frei von Lactam- und/oder Aminosäure-Bausteinen (d. h. ein Anteil von weniger als 2 Gewichtsprozent, vorzugsweise weniger als ein Gewichtsprozent, bezogen auf die Gesamtmasse von (A)). Vorzugsweise ist die Komponente (A) vollständig frei von Lactam- und/oder Aminosäure-Bausteinen.

Ein besonders bevorzugtes Copolyamid (A) ist aus den folgenden Monomeren aufgebaut:
- (a1) ist 1,6-Hexamethylendiamin im Bereich von 30 bis 33 Mol-%;
- (a2) ist MACM im Bereich von 17 bis 20 Mol-%;
- (a3) eine äquimolare Mischung aus Terephthalsäure und Isophthalsäure im Bereich von 29,5 bis 32,5 Mol-%;
- (a4) ist Dodecandisäure im Bereich von 17,5 bis 20,5 Mol-%;
wobei sich die Anteile der Monomere (a1) und (a2) auf die Summe der eingesetzten Diamine beziehen und sich auf 50 Mol-% ergänzen und sich die Anteile der Monomere (a3) und (a4) auf die Summe der eingesetzten Dicarbonsäuren beziehen und sich auf 50 Mol-% ergänzen.

Weiterhin ist es bevorzugt, wenn Komponente (A) eine relative Viskosität bestimmt an Lösungen von 0,5 g Polymer in 100 ml m-Kresol gemäss ISO 307 (2013) bei 20°C von 1,50 bis 1,90, besonders bevorzugt von 1,60 bis 1,80 und ganz besonders bevorzugt von 1,65 und 1,80 aufweist und/oder wenn Komponente (A) eine Glasübergangstemperatur von wenigstens 100°C, bevorzugt von wenigstens 120 oder 130°C und besonders bevorzugt von wenigstens 140°C aufweist, dabei aber bevorzugt von nicht mehr als 220°C oder nicht mehr als 200°C, wobei die Glastemperatur mittels DSC gemäss ISO 11357-2 (2013) mit einer Aufheizrate von 20 K/min bestimmt wird.

Die Copolyamide gemäß Komponente (A) sind amorph und haben keine messbaren oder nur sehr geringe Schmelzwärmen (Schmelzenthalpien) von bevorzugt höchstens 4 J/g, besonders bevorzugt von höchstens 2 J/g und ganz besonders bevorzugt von höchstens 1 J/g (bestimmt gemäss ISO 11357-3 (2013) an Granulat, Differential Scanning Calorimetry (DSC) mit einer Aufheizrate von 20 K/min).

### Komponente (B)

Gemäß einer bevorzugten Ausführungsform der vorliegenden Erfindung erfolgt die Funktionalisierung von Komponente (B) durch Copolymerisation und/oder durch Pfropfen. Dazu wird besonders bevorzugt eine Verbindung ausgewählt aus der Gruppe bestehend aus ungesättigten Carbonsäuren, ungesättigten Carbonsäurederivaten und Mischungen hiervon und/oder ungesättigten Glycidylverbindungen verwendet. Diese ist insbesondere bevorzugt ausgewählt aus der Gruppe bestehend aus ungesättigten Carbonsäureestern, insbesondere Acrylsäureestern und/oder Methacrylsäureestern, ungesättigten Carbonsäureanhydriden, insbesondere Maleinsäureanhydrid, Glycidylacrylsäure, Glycidylmethacrylsäure, α-Ethylacrylsäure, Maleinsäure, Fumarsäure, Itaconsäure, Citraconsäure, Aconitsäure, Tetrahydrophthalsäure, Butenylsuccinsäure und Mischungen hiervon.

Wenn die Funktionalisierung durch Copolymerisation erfolgt, liegt der Gewichtsanteil jeder einzelnen zur Funktionalisierung eingesetzten Verbindung bevorzugt im Bereich von 3 bis 20 Gew.-%, besonders bevorzugt von 5 bis 16 Gew.-% und insbesondere bevorzugt von 6 bis 14 Gew.-%, jeweils bezogen auf das Gesamtgewicht von Komponente (B).

Sofern die Funktionalisierung durch Pfropfung erfolgt, liegt der Gewichtsanteil jeder einzelnen zur Funktionalisierung eingesetzten Verbindung bevorzugt im Bereich von 0,4 bis 2,0 Gew.-%, besonders bevorzugt von 0,6 bis 1,6 Gew.-% und insbesondere bevorzugt von 0,8 bis 1,4 Gew.-%, jeweils bezogen auf das Gesamtgewicht von Komponente (B).

Durch Copolymersiation funktionalisierte Schlagzähmodifikatoren können zusätzlich auch noch durch Pfropfung funktionalisiert sein.

Bei den Styrol-Butadien-Styrol-Triblockcopolymeren handelt es sich um lineare Triblockcopolymere aus einem Butadien-Block und zwei Styrolblöcken.

Der Styrolanteil in den Styrol-Butadien-Styrol-Triblockcopolymeren beträgt bevorzugt von 25 bis 53 Gew.-%, besonders bevorzugt von 30 bis 48 Gew.-% und ganz besonders bevorzugt von 35 bis 45 Gew.-%.

Die Styrol-Butadien-Styrol-Triblockcopolymere weisen bevorzugt eine Schmelzfließrate (MFR) von 4 bis 25 g/10min, besonders bevorzugt von 5 bis 20 g/10min und ganz besonders bevorzugt von 6 bis 15 g/10min auf. Die Schmelzfließrate wird dabei bei 200°C und 5 kg nach ISO 1133 gemessen.

Der Styrolanteil in den Styrol-Butadien-Styrol-Triblockcopolymeren beträgt bevorzugt von 25 bis 53 Gew.-%, besonders bevorzugt von 30 bis 48 Gew.-% und ganz besonders bevorzugt von 35 bis 45 Gew.-% und/oder die Styrol-Butadien-Styrol-Triblockcopolymere sind mit 0,4 bis 2,0 Gew.-%, besonders bevorzugt von 0,6 bis 1,6 Gew.-% und insbesondere bevorzugt von 0,8 bis 1,4 Gew.-% Maleinsäureanhydrid gepfopft und/oder die Styrol-Butadien-Styrol-Triblockcopolymere weisen bevorzugt eine Schmelzfließrate (MFR) von 4 bis 25 g/10min, besonders bevorzugt von 5 bis 20 g/10min und ganz besonders bevorzugt von 6 bis 15 g/10min auf.

Die Styrol-Butadien-Styrol-Triblockcopolymere werden bevorzugt über anionische Polymerisation mit Butyllithium als Initiator hergestellt. Dies führt im Butadienblock zu 36 bis 38 % cis-1,4-Einheiten, 52 bis 53 % trans-1,4-Einheiten und 10 bis 12 % 1,2-Einheiten.

Die Styrol-Butadien-Styrol-Triblockcopolymere können auch in hydrierter, vernetzter oder vulkanisierter Form in den erfindungsgemäßen Polyamid-Formmassen eingesetzt werden.

Das mindestens eine Styrol-Butadien-Styrol-Triblockcopolymere gemäß Komponente (B) kann auch in Form einer Mischung oder eines Blends, d.h. einer in der Schmelze homogenisierten Mischung, mit einem oder mehreren unfunktionalisierten Styrol-Butadien-Styrol-Triblockcopolymeren eingesetzt werden, wobei sich der Gewichtsanteil der Funktionalisierung weiterhin innerhalb der vorher genannten Bereiche für die Funktionalisierung durch Copolymerisation bzw. durch Pfropfung bewegt.

Gemäß einer bevorzugten Ausführungsform enthalten die erfindungsgemäßen Polyamid-Formmassen jedoch keine unfunktionalisierten Styrol-Butadien-Styrol-Triblockcopolymere.

### Komponente (C)

Gemäß einer bevorzugten Ausführungsform weist Komponente (C) eine relative Viskosität im Bereich von 1,50 bis 2,25, bevorzugt von 1,65 bis 2,10 und besonders bevorzugt von 1,75 bis 2,00 auf. Die relative Viskosität wird dabei bei 20°C gemessen nach ISO 307 (2007) an einer Lösung von 0,5 g Polymer in 100 ml m-Kresol.

Gemäß einer weiteren bevorzugten Ausführungsform weist Komponente (C) einen Schmelzpunkt von 120 bis 225 °C, bevorzugt von 180 bis 210 °C, besonders bevorzugt von 190 bis 200 °C auf, wobei der Schmelzpunkt mittels DSC gemäß ISO 11357-3 (2013) mit einer Aufheizrate von 20 K/min bestimmt wird.

Eine andere bevorzugte Ausführungsform sieht vor, dass die Komponente (C) das Copolyamid PA 6/12 ist, gebildet aus ε-Caprolactam und 12-Laurinlactam.

Das PA 6/12 ist bevorzugt gebildet aus 96 bis 75 Mol-% ε-Caprolactam und 4 bis 25 Mol-% Laurinlactam, besonders bevorzugt aus 94 bis 80 Mol-% ε-Caprolactam und 6 bis 20 Mol-% Laurinlactam, ganz besonders bevorzugt aus 92 bis 82 Mol-% ε-Caprolactam und 8 bis 18 Mol-% 12-Laurinlactam.

Eine besonders bevorzugte Ausführungsform sieht vor, dass die Komponente (C) das Copolyanid 6/12 ist mit einem Schmelzpunkt von 200 °C, einer relativen Viskosität von 1,80 bis 2,00 und bestehend aus 90 Mol-% ε-Caprolactam und 10 Mol-% 12-Laurinlactam, wobei der Schmelzpunkt mittels DSC gemäß ISO 11357-3 (2013) mit einer Aufheizrate von 20 K/min und die relative Viskosität bei 20°C nach ISO 307 (2007) an einer Lösung von 0,5 g Polymer in 100 ml m-Kresol bestimmt wird.

### Komponente (D)

Gemäß einer bevorzugten Ausführungsform der vorliegenden Erfindung sind die Zusatzstoffe (D) ausgewählt aus der Gruppe bestehend aus anorganischen und organischen Stabilisatoren, insbesondere Antioxidantien, Antiozonantien, Lichtschutzmitteln, insbesondere UV-Stabilisatoren, UV-Absorbern oder UV-Blockern, Gleitmitteln, Farbstoffen, Markierungsmitteln, Pigmenten, Ruß, Graphit, Graphen, Kohlenstoffnanoröhrchen, photochromen Agenzien, Antistatika, Entformungsmitteln, Kondensationskatalysatoren, Kettenreglern, Entschäumern, Antiblockmitteln, kettenverlängernden Additiven, optischen Aufhellern, IR-Absorbern, NIR-Absorbern, halogenhaltigen Flammschutzmitteln, halogenfreien Flammschutzmitteln, natürlichen Schichtsilikaten, synthetischen Schichtsilikaten, metallischen Pigmenten, Metallflittern, metallbeschichteten Partikeln, teilchenförmigen Füllstoffen, faserförmigen Füllstoffen, nanoskaligen Füllstoffen mit einem Partikeldurchmesser (*d₉₅*) von maximal 100 nm, bestimmt mittels Laserbeugung nach ISO 13320 (2009) und Mischungen davon.

Die Schichtsilikate und Füllstoffe können oberflächenbehandelt sein. Dies kann mit einem geeigneten Schlichte- oder Haftvermittlersystem geschehen. Dazu können zum Beispiel Systeme auf Basis von Fettsäuren, Wachsen, Silanen, Titanaten, Polyamiden, Urethanen, Polyhydroxyethern, Epoxiden, Nickel respektive Kombinationen oder Mischungen davon verwendet werden.

Als teilchenförmige Füllstoffe kommen alle dem Fachmann bekannten Füllstoffe in Frage. Hierzu zählen insbesondere partikuläre Füllstoffe ausgewählt aus der Gruppe bestehend aus Mineralen, Talk, Glimmer, Dolomit, Silikaten, Quarz, Titandioxid, Wollastonit, Kaolin, Kieselsäuren, Magnesiumcarbonat, Magnesiumhydroxid, Kreide, gemahlenem Glas, Glasflakes, gemahlenen Carbonfasern, gemahlenem oder gefälltem Calciumcarbonat, Kalk, Feldspat, Bariumsulfat, Zinksulfid, Zinkoxid, permanentmagnetischen oder magnetisierbaren Metallen oder Legierungen, Glaskugeln, Hohlglaskugeln, hohlkugeligen Silikatfüllstoffen und Mischungen hiervon.

Gemäß einer besonders bevorzugten Ausführungsform der vorliegenden Erfindung sind die Zusatzstoffe (D) ausgewählt aus der Gruppe bestehend aus anorganischen und organischen Stabilisatoren, insbesondere Antioxidantien, Antiozonantien, Lichtschutzmitteln, insbesondere UV-Stabilisatoren, UV-Absorbern oder UV-Blockern, Gleitmitteln, Farbstoffen, Markierungsmitteln, Pigmenten, photochromen Agenzien, Antistatika, Entformungsmitteln, Kondensationskatalysatoren, Kettenreglern, Entschäumern, Antiblockmitteln, kettenverlängernden Additiven, optischen Aufhellern, IR-Absorbern, NIR-Absorbern, natürlichen Schichtsilikaten, synthetischen Schichtsilikaten, teilchenförmigen Füllstoffen, nanoskaligen Füllstoffen mit einem Partikeldurchmesser (*d₉₅*) von maximal 100 nm, bestimmt mittels Laserbeugung nach ISO 13320 (2009) und Mischungen davon.

Die Zusatzstoffe (D) sind bevorzugt von 0,1 bis 6 Gew.-% und besonders bevorzugt von 0,2 bis 4 Gew.-% enthalten, bezogen auf das Gesamtgewicht der Polyamid-Formmasse.

### Formkörper

Die erfindungsgemäßen Formkörper können aus der erfindungsgemäßen Polyamid-Formmasse über die gängigen Verarbeitungstechniken, wie z.B. Spritzgussverfahren hergestellt werden.

Eine bevorzugte Ausführungsform vorliegender Erfindung sieht vor, dass der Formkörper ausgewählt ist aus der Gruppe bestehend aus Dekorelementen, insbesondere im Automobilinnenraum oder Modebereich, Sportartikeln, insbesondere Skischuhen, Zwischensohlen für Sportschuhe, Freizeitartikeln, Spielzeugen, insbesondere Konstruktionselementen, Bausteinen, Figuren oder Modellen, Haushaltsartikeln, insbesondere Behältern, Schüsseln, Schalen, Dosen, Bechern, Babyflaschen oder Trinkflaschen, Bauteilen von Küchengeräten, Bauteilen von Brillen, insbesondere Brillenrahmen oder Brillenbügeln, insbesondere für Sicherheitsbrillen, Sportbrillen oder Skibrillen, Möbelbeschlägen, Einlegesohlen, Bau- und Sichtteilen für Geräte im Sanitär-, Hygiene- und Kosmetikbereich, Teilen von Sicherheitsschuhen, insbesondere Kappen, Filtertassen, Schaugläsern, Durchflussmessern, Berstscheiben, Behältern, Gehäusen oder Gehäuseteilen für Elektro- und Elektronikgeräte, insbesondere für Rasierapparate, Epiliergeräte, Messgeräte, Infrarotschlüssel, Mobiltelefone, Abspielgeräte, Personal Digital Assistants (PDA), Smartphones oder Speichermedien (z.B. USB-Sticks), Schutzhüllen für Mobiltelefone, Sichtteilen im Computer und Telekommunikationsbereich, Rohren, Schläuchen und Bauteilen von E-Zigaretten.

### Verwendungen

Weiterhin betrifft die vorliegende Erfindung die Verwendung der oben definierten erfindungsgemäßen Polyamid-Formmasse zur Herstellung von Dekorelementen, insbesondere im Automobilinnenraum oder Modebereich, Sportartikeln, insbesondere Skischuhen, Zwischensohlen für Sportschuhe, Freizeitartikeln, Spielzeugen, insbesondere Konstruktionselementen, Bausteinen, Figuren oder Modellen, Haushaltsartikeln, insbesondere Behältern, Schüsseln, Schalen, Dosen, Bechern, Babyflaschen oder Trinkflaschen, Bauteilen von Küchengeräten, Bauteilen von Brillen, insbesondere Brillenrahmen oder Brillenbügeln, insbesondere für Sicherheitsbrillen, Sportbrillen oder Skibrillen, Möbelbeschlägen, Einlegesohlen, Bau- und Sichtteilen für Geräte im Sanitär-, Hygiene- und Kosmetikbereich, Teilen von Sicherheitsschuhen, insbesondere Kappen, Filtertassen, Schaugläsern, Durchflussmessern, Berstscheiben, Behältern, Gehäusen oder Gehäuseteilen für Elektro- und Elektronikgeräte, insbesondere für Rasierapparate, Epiliergeräte, Messgeräte, Infrarotschlüssel, Mobiltelefone, Abspielgeräte, Personal Digital Assistants (PDA), Smartphones oder Speichermedien (z.B. USB-Sticks), Schutzhüllen für Mobiltelefone, Sichtteilen im Computer und Telekommunikationsbereich, Rohren, Schläuchen und Bauteilen von E-Zigaretten.

Anhand der nachfolgenden Beispiele soll der erfindungsgemäße Gegenstand näher erläutert werden, ohne diesen auf die hier gezeigten spezifischen Ausführungsformen einschränken zu wollen.

### Messmethoden

### • Relative Viskosität

Die relative Viskosität wurde gemäß ISO 307 (2007) bei 20 °C bestimmt. Dazu wurden 0,5 g Polymergranulat in 100 ml m-Kresol eingewogen, die Berechnung der relativen Viskosität (RV) nach RV = t/t₀ erfolgte in Anlehnung an Abschnitt 11 der Norm.

### • Schmelzpunkt und Glasübergangstemperatur (Tg)

Die Bestimmung des Schmelzpunkts erfolgte nach ISO 11357-3 (2013) an Granulat.

Die Differential Scanning Calorimetry (DSC) wurde bei jeder der beiden Aufheizungen mit einer Aufheizrate von 20 K/min durchgeführt. Nach der ersten Aufheizung wurde die Probe in Trockeneis abgeschreckt. Der Schmelzpunkt wurde bei der zweiten Aufheizung bestimmt.

Als Schmelzpunkt wurde die Temperatur am Peakmaximum angegeben. Der Mittelpunkt des Glasübergangsbereichs, welcher als Glasübergangstemperatur (Tg) angegeben wurde, wurde nach der Methode "Half Height" ermittelt.

### • Zug-E-Modul

Die Bestimmung des Zug-E-Moduls wurde gemäß ISO 527 (2012) bei 23°C mit einer Zuggeschwindigkeit von 1 mm/min an einem ISO-Zugstab (Typ A1, Masse 170 x 20/10 x 4) hergestellt gemäß der Norm: ISO/CD 3167 (2003), durchgeführt.

### • Kerbschlagzähigkeit nach Charpy

Die Bestimmung der Kerbschlagzähigkeit nach Charpy wurde gemäß DIN EN ISO 179/2eA (2000) bei 23 °C an einem ISO-Prüfstab, Typ B1 (Masse 80 x 10 x 4 mm), hergestellt gemäß der Norm ISO/CD 3167 (2003), durchgeführt.

### • Lichttransmission und Haze

Lichttransmission und Haze wurden bei 23 °C gemäß der ASTM D 1003 (2013) an 60 x 60 mm Platten (Breite x Länge) mit 2 mm Dicke und Filmanguss auf einem "Haze Gard plus" der Firma Byk Gardner mit CIE Lichtart C ermittelt. Der Lichttransmissionswert wurde in % der eingestrahlten Lichtmenge angegeben.

### • MVR (melt volume rate) bzw. MFR (melt flow rate)

Die Bestimmung des MVR bzw. MFR erfolgte nach ISO 1133-1 (2012) am Granulat des Schlagzähmodifikators bei der in Tabelle 1 angegebenen Temperatur und Belastung.

### • Herstellung der Prüfkörper

Zur Herstellung der Prüfkörper wurde Granulat mit einem Wassergehalt von weniger als 0,1 Gew.-% verwendet.

Die Prüfkörper wurden auf einer Spritzgussmaschine der Firma Arburg, Modell Allrounder 420 C 1000-250 hergestellt. Dabei wurden vom Einzug zur Düse auf- und absteigende Zylindertemperaturen verwendet.

ISO-Zugstäbe und ISO-Prüfstäbe

| | |
|---|---|
| Zylindertemperaturen: | 260/265/270/275/280/275 °C |
| Werkzeugtemperatur: | 80 °C |

Platten 60 x 60 x 2 mm

| | |
|---|---|
| Zylindertemperaturen: | 270/275/280/285/290/285 °C |
| Werkzeugtemperatur: | 80 °C |

Für die Herstellung der Platten wurde ein poliertes Werkzeug verwendet.

Die Prüfkörper wurden, sofern nichts anderes angegeben ist, in trockenem Zustand verwendet; dazu wurden sie nach dem Spritzguss mindestens 48 h bei Raumtemperatur in trockener Umgebung, d.h. über Silicagel, gelagert.

### Ausgangsmaterialien

Die in den Beispielen und Vergleichsbeispielen verwendeten Materialien werden in den Tabellen 1 und 2 zusammengefasst.

**Tabelle 1: In den Beispielen und Vergleichsbeispielen verwendete Materialien.**

| **Komponenten** | **Beschreibung** | **Hersteller** |
|---|---|---|
| Polyamid (A) | Amorphes Polyamid aus 1,6-Hexandiamin (31,5 Mol-%), Bis(3-methyl-4-amino-cyclohexyl)methan (18,5 Mol-%), Isophthalsäure (15,5 Mol-%), Terephthalsäure (15,5 Mol-%) und 1,12-Dodecandisäure (19,0 Mol-%) RV* 1,71 (gemessen mit 0,5 g in 100 ml m-Kresol bei 20 °C) Glasübergangstemperatur 141 °C | EMS-CHEMIE AG, Schweiz |
| Schlagzähmodifikator (B) | Styrol-Butadien-Styrol-Triblockcopolymer mit 40 Gew-% Styrol gepfropft mit 1,0 Gew.-% Maleinsäureanhydrid MFR 22 g/10min bei 200 °C und 5 kg. Handelsname: Tufprene 912 | Asahi Kasei Corporation, Japan |
| Polyamid (C1) | Teilkristallines linear aliphatisches Copolyamid 6/12 aus Caprolactam (90 Mol-%) und Laurinlactam (10 Mol-%) RV* 1,87 (gemessen mit 0,5 g in 100 ml m-Kresol bei 20 °C) Schmelzpunkt 200 °C | EMS-CHEMIE AG, Schweiz |
| Polyamid (C2) | Teilkristallines linear aliphatisches Polyamid 612 aus 1,6-Hexandiamin und 1,12-Dodecandisäure RV* 1,80 (gemessen mit 0,5 g in 100 ml m-Kresol bei 20 °C) Schmelzpunkt 220 °C | EMS-CHEMIE AG, Schweiz |
| Polyamid MACM12 | Amorphes Polyamid aus Bis(3-methyl-4-aminocyclohexyl)methan und 1,12-Dodecandisäure RV* 1,53 (gemessen mit 0,5 g in 100 ml m-Kresol bei 20 °C) Glasübergangstemperatur 155 °C | EMS-CHEMIE AG, Schweiz |
| Polyamid MACMI/MACMT/12 | Amorphes Polyamid aus Bis(3-methyl-4-amino-cyclohexyl)-methan (38,0 Mol-%), Isophthalsäure (19,0 Mol-%), Terephthalsäure (19,0 Mol-%) und Laurinlactam (24,0 mol-%) C-Atome pro Amidgruppe 9,3 RV* 1,53 (gemessen mit 0,5 g in 100 ml m-Kresol bei 20 °C) Glasübergangstemperatur 194 °C | EMS-CHEMIE AG, Schweiz |
| Polyamid MACMI/MACM36 | Amorphes Polyamid aus Bis(3-methyl-4-amino-cyclohexyl)-methan (50,0 Mol-%), Isophthalsäure (40,5 Mol-%) und dimerer Fettsäure mit 36 C-Atomen (9,5 Mol-%) RV* 1,42 (gemessen mit 0,5 g in 100 ml m-Kresol bei 20 °C) Glasübergangstemperatur 195 °C | EMS-CHEMIE AG, Schweiz |
| Polyamid 6T/6I/MACMT/MACMI/PACMT/ PACMI/12 | Amorphes Polyamid aus 1,6-Hexandiamin (39,0 Mol-%), Bis(3-methyl-4-amino-cyclohexyl)methan (7,1 Mol-%), Bis(4-aminocyclohexyl)methan (2,5 Mol-%), Isophthalsäure (24,3 Mol-%), Terephthalsäure (24,3 Mol-%) und Laurinlactam (2,8 Mol-%) RV* 1,60 (gemessen mit 0,5 g in 100 ml m-Kresol bei 20 °C) Glasübergangstemperatur 159 °C | EMS-CHEMIE AG, Schweiz |
| Kraton FG1901 GT | Styrol-Ethylen/Butylen-Styrol-Blockcopolymer mit 30 Gew-% Styrol, gepfropft mit 1,7 Gew.-% Maleinsäureanhydrid MVR 130 cm³/10min bei 275 °C und 5 kg | Kraton Polymers LLC, USA |
| Tafmer MC201 | Blend aus Ethylen/Propylen-Copolymer und Ethylen/1-Buten-Copolymer im Gewichtsverhältniss 67 : 33 0,6 Gew.-% Maleinsäureanhydrid MVR* 1,3 cm³/10min bei 230 °C und 2,16 kg | Mitsui Chemicals, Japan |
| Paraloid BTA 753 | Kern-Schale Polymer mit Butadien-Methylmethacrylat-Copolymer als Kern und Polystyrol als Mantel | Rohm and Haas, USA |
| Lotader AX 8840 | Copolymer aus Ethylen und Glycidylmethacrylat mit 8 Gew.-% Glycidylmethacrylat MFR 5 g/10min bei 190 °C und 2,16 kg | Arkema GmbH, Deutschland |

| | | |
|---|---|---|
| * relative Viskosität, gemessen an einer Lösung aus 0,5 g Polyamid in 100 ml m-Kresol bei 20 °C | | |

**Tabelle 2: In den Beispielen und Vergleichsbeispielen verwendete Materialien.**

| **Komponenten** | **Beschreibung** | **Handelsname** | **Hersteller** |
|---|---|---|---|
| Stabilisator 1 | N,N'-Hexan-1,6-diylbis[3-(3,5-di-tert-butyl-4-hydroxyphenyl-propionamid CAS-Nr.: 23128-74-7 | Irganox 1098 | BASF SE, Deutschland |
| Stabilisator 2 | Tris(2,4-ditert-butylphenyl)phosphit CAS-Nr.: 31570-04-4 | Hostanox PAR24 | Clariant Produkte (Schweiz) AG, Schweiz |
| Stabilisator 3 | N,N'-Bis(2,2,6,6,tetramethyl-4-piperidinyl)-1,3-benzen-dicarboxamid CAS-Nr.: 42774-15-2 | Nylostab S-EED P | Clariant Produkte (Schweiz) AG, Schweiz |

### Beispiele und Vergleichsbeispiele

### Allgemeine Herstellungsvorschrift für die Copolvamide (A)

Die Herstellung der erfindungsgemäßen transparenten Copolyamide erfolgt auf an sich bekannte Weise in bekannten, rührbaren Druckautoklaven mit einem Vorlagegefäß und einem Reaktionsgefäß:
Im Vorlagegefäß wird deionisiertes Wasser vorgelegt und die Monomere und etwaige Zusatzstoffe zugegeben. Danach wird mehrfach mit Stickstoffgas inertisiert. Unter Rühren wird auf 180 bis 230 °C unter dem sich einstellenden Druck aufgeheizt, um eine homogene Lösung zu erhalten. Diese Lösung wird durch ein Sieb in das Reaktionsgefäß gepumpt und dort auf die gewünschte Reaktionstemperatur von 270 bis 310 °C bei einem Druck von maximal 30 bar aufgeheizt. Der Ansatz wird in der Druckphase für 2 bis 4 Stunden auf der Reaktionstemperatur gehalten. In der anschließenden Entspannungsphase wird der Druck innerhalb von 1 bis 2 Stunden auf atmosphärischen Druck reduziert, wobei die Temperatur leicht sinken kann. In der folgenden Entgasungsphase wird der Ansatz bei atmosphärischem Druck für 0,5 bis 3 Stunden auf einer Temperatur von 250 bis 310 °C gehalten. Die Polymerschmelze wird in Strangform ausgetragen, im Wasserbad bei 10 bis 80 °C abgekühlt und granuliert. Das Granulat wird bei 60 bis 120 °C unter Stickstoff oder im Vakuum auf einen Wassergehalt von weniger als 0,1 Gew.-% getrocknet.

### Allgemeine Herstellungsvorschrift für die Polyamid-Formmassen

Zur Herstellung der erfindungsgemäßen Polyamid-Formmasse werden die Komponenten (A), (B) und gegebenenfalls (C) und/oder (D) auf üblichen Compoundiermaschinen, wie z.B. ein- oder zweiwelligen Extrudern oder Schneckenknetern gemischt. Die Komponenten werden dabei einzelnen über gravimetrische oder volumetrische Dosierwaagen in den Einzug oder jeweils in einen Sidefeeder dosiert oder in Form eines Dryblends zugeführt.

Werden Zusatzstoffe (Komponente (D)) verwendet, können diese direkt oder in Form eines Masterbatches eingebracht werden. Bei dem Trägermaterial des Masterbatches handelt es sich bevorzugt um ein Polyamid oder ein Polyolefin. Unter den Polyamiden eignet sich dazu besonders das Polyamid der Komponente (A).

Zur Dryblend-Herstellung werden die getrockneten Granulate der Komponenten (A), (B) und gegebenenfalls (C) und/oder (D) in einem geschlossenen Behälter vermischt. Diese Mischung wird mittels eines Taumelmischers, Rhönradmischers oder Taumeltrockners 10 bis 40 Minuten lang homogenisiert. Zur Vermeidung der Feuchtigkeitsaufnahme kann dies unter getrocknetem Schutzgas erfolgen.

Die Compoundierung erfolgt bei eingestellten Zylindertemperaturen von 250 bis 310 °C, wobei die Temperatur des ersten Zylinders unter 90 °C eingestellt werden kann. Vor der Düse kann entgast werden. Dies kann mittels Vakuum oder atmosphärisch erfolgen. Die Schmelze wird in Strangform ausgetragen, im Wasserbad bei 10 bis 80 °C abgekühlt und anschließend granuliert. Das Granulat wird bei 60 bis 120 °C unter Stickstoff oder im Vakuum auf einen Wassergehalt von unter 0,1 Gew.-% getrocknet.

### Herstellung der Polyamid-Formmasse gemäß Beispiel 1

Die getrockneten Granulate der Komponenten (A) und (B) und die Zusatzstoffe (D) wurden zu einem Dryblend vermischt, und zwar in dem in der Tabelle 3 angegebenen Verhältnis. Diese Mischung wurde mittels eines Taumelmischers ca. 20 Minuten lang homogenisiert.

Die Polyamid-Formmasse wurde auf einem Zweiwellenextruder der Firma Werner & Pfleiderer Typ ZSK 25 hergestellt. Das Dryblend wurde dabei über eine Dosierwaage in den Einzug dosiert.

Die Temperatur des ersten Gehäuses wurde auf 50 °C eingestellt, diejenige der restlichen Gehäuse auf 270 bis 290 °C. Es wurde eine Drehzahl von 200 U/min und ein Durchsatz von 10 kg/h verwendet. Es wurde nicht entgast. Der Schmelzestrang wurde im Wasserbad abgekühlt, geschnitten und das erhaltene Granulat bei 80 °C für 24 h im Vakuum (30 mbar) auf einen Wassergehalt von unter 0,1 Gew.-% getrocknet.

### Versuchsergebnisse

Alle Beispiele und Vergleichsbeispiele enthalten 0,3 Gew.-% Zusatzstoffe, welche sich aus jeweils 0,1 Gew.-% der Stabilisatoren 1 bis 3 zusammensetzen.

Die erfindungsgemäßen Formmassen wurden hinsichtlich des Zug-E-Moduls, der Kerbschlagzähigkeit, des Haze und der Lichttransmission unter den Messbedingungen, wie sie zuvor angegeben wurden, untersucht.

Die Ergebnisse dieser Untersuchungen sind in Tabelle 3 dargestellt.

**Tabelle 3: Beispiele**

| **Komponenten** | **Einheit** | **Beispiele** | | | | | | |
|---|---|---|---|---|---|---|---|---|
| | | **1** | **2** | **3** | **4** | **5** | **6** | **7** |
| Polyamid (A) | Gew.-% | 89.7 | 92.2 | 89.7 | 84.7 | 79.7 | 84.7 | 89.7 |
| SBS-Schlagzähmodifikator (B) | Gew.-% | 5.0 | 7.5 | 10.0 | 10.0 | 10.0 | 10.0 | 20.0 |
| Polyamid (C1) | Gew.-% | - | - | - | 5.0 | 10.0 | - | - |
| Polyamid (C2) | Gew.-% | - | - | - | - | - | 5.0 | - |
| Zusatzstoffe | Gew.-% | 0.3 | 0.3 | 0.3 | 0.3 | 0.3 | 0.3 | 0.3 |

| **Messwerte** | | | | | | | | |
|---|---|---|---|---|---|---|---|---|
| Zug-E-Modul | MPa | 1990 | 1940 | 1840 | 1890 | 1910 | 1855 | 1535 |
| Kerbschlagzähigkeit, Charpy , 23 °C | kJ/m² | 22 | 23 | 25 | 26 | 26 | 27 | 33 |
| Haze | % | 5.0 | 7.1 | 9.8 | 7.0 | 6.2 | 7.1 | 22.5 |
| Lichttransmission | % | 92.7 | 91.1 | 92.0 | 91.2 | 91.0 | 91.1 | 90.8 |

Ebenso wurden nicht-erfindungsgemäße Formmassen hinsichtlich des Zug-E-Moduls, der Kerbschlagzähigkeit, des Haze und der Lichttransmission unter den gleichen Messbedingungen untersucht. In der folgenden Tabelle 4 werden die Resultate der Vergleichsbeispiele zusammengefasst.

**Tabelle 4: Vergleichsbeispiele**

| **Komponenten** | **Einheit** | **Vergleichsbeispiele** | | | | | | | | | |
|---|---|---|---|---|---|---|---|---|---|---|---|
| | | **8** | **9** | **10** | **11** | **12** | **13** | **14** | **15** | **16** | **17** |
| Polyamid (A) | Gew.-% | 89.7 | 89.7 | 92.2 | 92.2 | - | - | - | - | - | 99.97 |
| Polyamid MACM12 | Gew.-% | - | - | - | - | 89.7 | 89.7 | - | - | - | - |
| Polyamid 0MACMI/MACMT/12 | Gew.-% | - | - | - | - | - | - | 89.7 | - | - | - |
| Polyamid MACMI/MACM36 | Gew.-% | - | - | - | - | - | - | - | 89.7 | - | - |
| Polyamid 6I/6T/MACMI/MACMT/PACMI/ PACMT/12 | Gew.-% | - | - | - | - | - | - | - | - | 89.7 | - |
| SBS-Schlagzähmodifikator (B) | Gew.-% | - | - | - | - | 10.0 | - | 10.0 | 10.0 | 10.0 | - |
| Kraton FG1901 GT | Gew.-% | 10.0 | - | - | - | - | 10.0 | - | - | - | - |
| Tafmer MC201 | Gew.-% | - | 10.0 | - | - | - | - | - | - | - | - |
| Paraloid BTA 753 | Gew.-% | - | - | 7.5 | - | - | - | - | - | - | - |
| Lotader AX 8840 | Gew.-% | - | - | - | 7.5 | - | - | - | - | - | - |
| Zusatzstoffe | Gew.-% | 0.3 | 0.3 | 0.3 | 0.3 | 0.3 | 0.3 | 0.3 | 0.3 | 0.3 | 0.3 |

| **Messwerte** | | | | | | | | | | | |
|---|---|---|---|---|---|---|---|---|---|---|---|
| Zug-E-Modul | MPa | 1825 | 2120 | 2025 | 1935 | 1305 | 1285 | 1785 | 1850 | 2510 | 2285 |
| Kerbschlagzähigkeit, Charpy, 23 °C | kJ/m² | 83 | 85 | 28 | 49 | 69 | 75 | 24 | 14 | 35 | 9 |
| Haze | % | 89.7 | 99.4 | 78.8 | 39.3 | 100 | 12.4 | 38.2 | 64.7 | 99.1 | 0.5 |
| Lichttransmission | % | 46.5 | 13.0 | 77.7 | 45.0 | 60.4 | 90.4 | 90.8 | 88.8 | 20.2 | 93.5 |

### 4 Diskussion der Ergebnisse

Die Materialien der Beispiele 1 bis 7 zeigen gegenüber dem nicht schlagzähmodifizierten Polyamid (A) aus Vergleichsbeispiel 17 eine deutlich verbesserte Kerbschlagzähigkeit und zwar ohne starke Beeinträchtigung von Haze, Lichttransmission oder Zug-E-Modul.

Andere Schlagzähmodifikatoren im Polyamid (A) verschlechtern Haze, Lichttransmission oder den Zug-E-Modul wie den Vergleichsbeispielen 8 bis 11 zu entnehmen ist.

Der Schlagzähmodifikator (B) bewirkt in anderen amorphen Polyamiden eine deutliche Verschlechterung von Haze, Lichttransmission oder Zug-E-Modul wie die Vergleichsbeispiele 12 bis 16 darlegen.

## Patentansprüche

1. Polyamid-Formmasse enthaltend oder bestehend aus den Komponenten (A) bis (D):
(A) 55 bis 97 Gew.-% mindestens eines amorphen Copolyamids gebildet aus den Monomeren (a1) bis (a4):
(a1) 25 bis 40 Mol-% mindestens eines acyclischen, aliphatischen Diamins mit 6 bis 10 Kohlenstoffatomen;
(a2) 10 bis 25 Mol-% mindestens eines cycloaliphatischen Diamins mit 6 bis 36 Kohlenstoffatomen;
(a3) 20 bis 40 Mol-% mindestens einer aromatischer Dicarbonsäure;
(a4) 10 bis 30 Mol-% mindestens einer acyclischen, aliphatischen Dicarbonsäure mit 8 bis 16 Kohlenstoffatomen;
wobei sich die Anteile der Monomere (a1) und (a2) auf die Summe der eingesetzten Diamine beziehen und sich auf 50 Mol-% ergänzen und die Anteile der Monomere (a3) und (a4) auf die Summe der eingesetzten Dicarbonsäuren beziehen und sich auf 50 Mol-% ergänzen;
(B) 3 bis 22 Gew.-% mindestens eines funktionalisierten Styrol-Butadien-Styrol Triblockcopolymeren;
(C) 0 bis 15 Gew.-% mindestens eines aliphatischen teilkristallinen Polyamids, ausgewählt aus der Gruppe bestehend aus PA 6/12 und PA 612; und
(D) 0 bis 8 Gew.-% mindestens eines Zusatzstoffes;
wobei sich die Mengenanteile der Komponenten (A) bis (D) auf 100 Gew.-% ergänzen.

2. Polyamid-Formmasse nach Anspruch 1, **dadurch gekennzeichnet, dass**
der Anteil von Komponente (A) in der Polyamid-Formmasse im Bereich von 51 bis 97 Gew.-%, bevorzugt von 67 bis 93 Gew.-% und besonders bevorzugt von 77 bis 90,9 Gew.%, bezogen auf das Gesamtgewicht der Polyamid-Formmasse liegt, und/oder
der Anteil von Komponente (B) in der Polyamid-Formmasse im Bereich von 3 bis 20 Gew.-%, bevorzugt von 4 bis 17 Gew.-%, besonders bevorzugt von 4 bis 10 Gew.%, bezogen auf das Gesamtgewicht der Polyamid-Formmasse liegt, und/oder
der Anteil von Komponente (C) in der Formmasse im Bereich von 0 bis 13 Gew.-%, bevorzugt von 3 bis 12 Gew.-% und besonders bevorzugt von 5 bis 10 Gew.%, bezogen auf das Gesamtgewicht der Polyamid-Formmasse liegt, und/oder
der Anteil von Komponente (D) in der Formmasse im Bereich von 0 bis 6 Gew.-%, bevorzugt von 0 bis 4 Gew.-% und besonders bevorzugt von 0,1 bis 3 Gew.%, bezogen auf das Gesamtgewicht der Polyamid-Formmasse liegt.

3. Polyamid-Formmasse nach einem der vorhergehenden Ansprüche, **dadurch gekennzeichnet, dass**
• der an einem aus der Polyamid-Formmasse hergestellten Formkörper (2 mm dicke Platten mit Breite und Länge: 60 x 60 mm) nach ASTM D1003 gemessene Haze der Polyamid-Formmasse maximal 20 %, bevorzugt maximal 15 %, besonders bevorzugt maximal 10 % beträgt und/oder
• die an einem aus der Polyamid-Formmasse hergestellten Formkörper (2 mm dicke Platten mit Breite und Länge: 60 x 60 mm) nach ASTM D1003 gemessene Transparenz mindestens 80 %, bevorzugt mindestens 85 % und besonders bevorzugt mindestens 90 % beträgt und/oder
• ein aus der Polyamid-Formmasse hergestellter Formkörper einen Zug-E-Modul bestimmt nach ISO 527 von mindestens 1500 MPa, bevorzugt mindestens 1700 MPa, besonders bevorzugt mindestens 1800 MPa aufweist; und/oder
• ein aus der Polyamid-Formmasse hergestellter Formkörper eine Kerbschlagzähigkeit bestimmt nach DIN EN ISO 179/2eA von mindestens 18 kJ/m², bevorzugt 21 kJ/m².

4. Polyamid-Formmasse nach einem der vorhergehenden Ansprüche, **dadurch gekennzeichnet, dass**
das Monomer (a1) ein lineares oder verzweigtes Diamin mit 6 bis 8 Kohlenstoffatomen, bevorzugt 1,6-Hexamethylendiamin und/oder 2-Methyl-1,5-Pentandiamin ist, und/oder
das Monomer (a2) ein cycloaliphatisches Diamin mit 12 bis 20 Kohlenstoffatomen ist, welches vorzugsweise ausgewählt ist aus der Gruppe bestehend aus Bis-(4-amino-3-methyl-cyclohexyl)-methan (MACM), Bis-(4-amino-cyclohexyl)-methan (PACM), 2,2-Bis-(4-amino-cyclohexyl)-propan (PACP), 2,2-Bis-(4-amino-3-methyl-cyclohexyl)-propan (MACP), Bis-(4-Amino-3-ethyl-cyclohexyl)-methan (EACM), 2,2-Bis-(4-amino-3-ethyl-cyclohexyl)-propan (EACP), Bis-(4-Amino-3,5-dimethy-cyclohexyl)-methan (TMACM), 2,2-Bis-(4-amino-3,5-dimethy-cyclohexyl)-propan (TMACP) und Mischungen davon, wobei Bis-(4-amino-3-methyl-cyclohexyl)-methan (MACM), Bis-(4-amino-cyclohexyl)-methan (PACM) und Mischungen davon besonders bevorzugt sind, und/oder das Monomer (a3) eine aromatische Dicarbonsäure mit 6 bis 36 Kohlenstoffatomen ist, welche vorzugsweise ausgewählt ist aus der Gruppe bestehend aus Terephthalsäure (TPS), Naphthalindicarbonsäure (NDA), einschliesslich 1,5-Naphthalindicarbonsäure und 2,6-Naphthalindicarbonsäure, Isophthalsäure (IPS), Biphenyl-dicarbonsäuren, bevorzugt Biphenyl-2,2'-dicarbonsäure, 4,4'-Diphenyldicarbonsäure, 3,3'-Diphenyldicarbonsäure, 4,4'-Diphenyl-etherdicarbonsäure, 4,4'-Diphenylmethandicarbonsäure und 4,4'-Diphenylsulfondicarbonsäure, 1,5-Anthracendicarbonsäure, p-Terphenylen-4,4"-dicarbonsäure und 2,5-Pyridindicarbonsäure und Mischungen davon, wobei Terephthalsäure und Isophthalsäure und Mischungen davon besonders bevorzugt sind, und/oder
das Monomer (a4) eine acyclische, lineare oder verzweigte aliphatische Dicarbonsäure mit 10 bis 14 Kohlenstoffatomen ist, welche vorzugsweise ausgewählt ist aus der Gruppe bestehend aus Decandisäure, Undecandisäure, Dodecandisäure, Tridecandisäure, Tetradecandisäure und Mischungen davon, besonders bevorzugt Dodecandisäure und insbesondere bevorzugt ausschließlich Dodecandisäure.

5. Polyamid-Formmasse gemäß einem der vorhergehenden Ansprüche, **dadurch gekennzeichnet, dass** das Monomer (a3) eine Mischung aus Terephthalsäure und Isophthalsäure ist, bevorzugt in einem molaren Verhältnis von 2:1 bis 1:2, besonders bevorzugt in einem Verhältnis von 1,5:1 bis 1:1,5, und höchst bevorzugt eine äquimolare Mischung aus Terephthalsäure und Isophthalsäure.

6. Polyamid-Formmasse gemäß einem der vorhergehenden Ansprüche, **dadurch gekennzeichnet, dass**
• der Anteil an Monomer (a1) im Copolyamid im Bereich von 27,5 bis 40 Mol-%, bevorzugt im Bereich von 30 bis 38,5 Mol-% liegt; und/oder
• der Anteil an Monomer (a2) im Copolyamid im Bereich von 10 bis 22,5 Mol-%, bevorzugt im Bereich von 11,5 bis 20 Mol-% liegt;
wobei sich die Anteile der Monomere (a1) und (a2) auf die Summe der eingesetzten Diamine beziehen und sich auf 50 Mol-% ergänzen;
und/oder
• der Anteil an Monomer (a3) im Copolyamid im Bereich von 25 bis 40 Mol-%, bevorzugt im Bereich von 30 bis 37,5 Mol-% liegt; und/oder
• der Anteil an Monomer (a4) im Copolyamid im Bereich von 10 bis 25 Mol-%, bevorzugt im Bereich von 12,5 bis 20 Mol-% liegt;
wobei sich die Anteile der Monomere (a3) und (a4) auf die Summe der eingesetzten Dicarbonsäuren beziehen und sich auf 50 Mol-% ergänzen.

7. Polyamid-Formmasse gemäß einem der vorhergehenden Ansprüche, **dadurch gekennzeichnet, dass**
• Monomer (a1) 1,6-Hexamethylendiamin ist;
• Monomer (a2) ausgewählt ist aus der Gruppe bestehend aus Bis-(4-amino-3-methyl-cyclohexyl)-methan (MACM), Bis-(4-amino-cyclohexyl)-methan (PACM) und Mischungen davon, vorzugsweise als ausschließlich Bis-(4-amino-3-methyl-cyclohexyl)-methan (MACM);
• Monomer (a3) ausgewählt ist aus der Gruppe bestehend aus Terephthalsäure, Isophthalsäure und Mischungen davon, vorzugsweise eine Mischung in einem Verhältnis von 1.5:1 bis 1:1.5, insbesondere vorzugsweise eine äquimolare Mischung;
• Monomer (a4) Dodecandisäure ist;
wobei vorzugsweise die Anteile der Monomere wie folgt ausgewählt sind:
• (a1) im Bereich von 30 bis 37,5 Mol-%;
• (a2) im Bereich von 12,5 bis 20 Mol-%;
• (a3) im Bereich von 30 bis 37,5 Mol-%;
• (a4) im Bereich von 12,5 bis 20 Mol-%;
wobei sich die Anteile der Monomere (a1) und (a2) auf die Summe der eingesetzten Diamine beziehen und sich auf 50 Mol-% ergänzen und wobei sich die Anteile der Monomere (a3) und (a4) auf die Summe der eingesetzten Dicarbonsäuren beziehen und sich auf 50 Mol-% ergänzen.

8. Polyamid-Formmasse gemäß einem der vorhergehenden Ansprüche, **dadurch gekennzeichnet, dass** die Komponente (B) ein lineares Triblockcopolymer aus einem Butadien-Block und zwei Styrolblöcken ist, wobei der Styrolanteil in den Styrol-Butadien-Styrol-Triblockcopolymeren bevorzugt von 25 bis 53 Gew.-%, besonders bevorzugt von 30 bis 48 Gew.-% und ganz besonders bevorzugt von 35 bis 45 Gew.-% beträgt.

9. Polyamid-Formmasse gemäß einem der vorhergehenden Ansprüche, **dadurch gekennzeichnet, dass** die Komponente (B) durch Copolymerisation und/oder Pfropfen funktionalisiert ist, wobei zur Copolymerisation und/oder Pfropung vorzugsweise eine Verbindung ausgewählt aus der Gruppe bestehend aus ungesättigten Carbonsäuren, ungesättigten Carbonsäurederivaten und Mischungen hiervon und/oder ungesättigten Glycidylverbindungen, bevorzugt einer Verbindung ausgewählt aus der Gruppe bestehend aus ungesättigten Carbonsäureestern, insbesondere Acrylsäureestern und/oder Methacrylsäureestern, ungesättigten Carbonsäureanhydriden, besonders bevorzugt einer Verbindung ausfgewählt aus der Gruppe bestehend aus Maleinsäureanhydrid, Glycidylacrylsäure, Glycidylmethacrylsäure, α-Ethylacrylsäure, Maleinsäure, Fumarsäure, Itaconsäure, Citraconsäure, Aconitsäure, Tetrahydrophthalsäure, Butenylsuccinsäure und Mischungen hiervon eingesetzt wird.

10. Polyamid-Formmasse nach dem vorhergehenden Anspruch,
**dadurch gekennzeichnet, dass**
• bei der Copolymerisation der Komponente (B) der Gewichtsanteil jeder einzelnen zur Copolymerisation eingesetzten Verbindung im Bereich von 3 bis 20 Gew.-%, bevorzugt von 5 bis 16 Gew.-% und besonders bevorzugt von 6 bis 14 Gew.-%, jeweils bezogen auf das Gesamtgewicht von Komponente (B), liegt und/oder
• bei der Pfropfung der Komponente (B) der Gewichtsanteil jeder einzelnen zur Copolymerisation eingesetzten Verbindung im Bereich von 0,4 bis 2,0 Gew.-%, bevorzugt von 0,6 bis 1,6 Gew.-% und besonders bevorzugt von 0,8 bis 1,4 Gew.-%, jeweils bezogen auf das Gesamtgewicht von Komponente (B), liegt.

11. Polyamid-Formmasse gemäß einem der vorhergehenden Ansprüche, **dadurch gekennzeichnet, dass** die Komponente (C) das Copolyamid PA6/12 ist, gebildet aus ε-Caprolactam und 12-Laurinlactam, bevorzugt gebildet aus 96 bis 75 Mol-% ε-Caprolactam und 4 bis 25 Mol-% Laurinlactam, besonders bevorzugt aus 94 bis 80 Mol-% ε-Caprolactam und 6 bis 20 Mol-% Laurinlactam, ganz besonders bevorzugt aus 92 bis 82 Mol-% ε-Caprolactam und 8 bis 18 Mol-% 12-Laurinlactam.

12. Polyamid-Formmasse nach einem der vorhergehenden Ansprüche, **dadurch gekennzeichnet, dass** die Zusatzstoffe (D) ausgewählt sind aus der Gruppe bestehend aus anorganischen und organischen Stabilisatoren, insbesondere Antioxidantien, Antiozonantien, Lichtschutzmitteln, insbesondere UV-Stabilisatoren, UV-Absorbern oder UV-Blockern, Gleitmitteln, Farbstoffen, Markierungsmitteln, Pigmenten, Ruß, Graphit, Graphen, Kohlenstoffnanoröhrchen, photochromen Agenzien, Antistatika, Entformungsmitteln, Kondensationskatalysatoren, Kettenreglern, Entschäumern, Antiblockmitteln, kettenverlängernden Additiven, optischen Aufhellern, IR-Absorbern, NIR-Absorbern, halogenhaltigen Flammschutzmitteln, halogenfreien Flammschutzmitteln, natürlichen Schichtsilikaten, synthetischen Schichtsilikaten, metallischen Pigmenten, Metallflittern, metallbeschichteten Partikeln, teilchenförmigen Füllstoffen, faserförmigen Füllstoffen, nanoskaligen Füllstoffen mit einem Partikeldurchmesser (*d₉₅*) von maximal 100 nm, bestimmt mittels Laserbeugung nach ISO 13320 (2009) und Mischungen davon.

13. Polyamid-Formmasse nach Anspruch 12, **dadurch gekennzeichnet, dass** die faserförmigen Füllstoffe ausgewählt sind aus der Gruppe bestehend aus Glasfasern, Carbonfasern, Metallfasern, Aramidfasern, pflanzlichen Fasern, Cellulosefasern, insbesondere Nano-Cellulosefasern, Polymerfasern, Whiskers, Mineralfasern und Mischungen hiervon, bevorzugt Carbonfasern, Metallfasern, Aramidfasern, pflanzlichen Fasern, Cellulosefasern, insbesondere Nano-Cellulosefasern, Polymerfasern, Whiskers, Mineralfasern und Mischungen hiervon.

14. Formkörper herstellbar aus einer Polyamid-Formmasse nach einem der vorhergehenden Ansprüche.

15. Formkörper nach Anspruch 14,
**dadurch gekennzeichnet, dass** der Formkörper ausgewählt ist aus der Gruppe bestehend aus Dekorelementen, insbesondere im Automobilinnenraum oder Modebereich, Sportartikeln, insbesondere Skischuhen, Zwischensohlen für Sportschuhe, Freizeitartikeln, Spielzeugen, insbesondere Konstruktionselementen, Bausteinen, Figuren oder Modellen, Haushaltsartikeln, insbesondere Behältern, Schüsseln, Schalen, Dosen, Bechern, Babyflaschen oder Trinkflaschen, Bauteilen von Küchengeräten, Bauteilen von Brillen, insbesondere Brillenrahmen oder Brillenbügeln, insbesondere für Sicherheitsbrillen, Sportbrillen oder Skibrillen, Möbelbeschlägen, Einlegesohlen, Bau- und Sichtteilen für Geräte im Sanitär-, Hygiene- und Kosmetikbereich, Teilen von Sicherheitsschuhen, insbesondere Kappen, Filtertassen, Schaugläsern, Durchflussmessern, Berstscheiben, Behältern, Gehäusen oder Gehäuseteilen für Elektro- und Elektronikgeräte, insbesondere für Rasierapparate, Epiliergeräte, Messgeräte, Infrarotschlüssel, Mobiltelefone, Abspielgeräte, Personal Digital Assistants (PDA), Smartphones oder Speichermedien, insbesondere USB-Sticks, Schutzhüllen für Mobiltelefone, Sichtteilen im Computer und Telekommunikationsbereich, Rohren, Schläuchen, Folien und Bauteilen von E-Zigaretten.

16. Verwendung der Polyamid-Formmassen nach einem der Ansprüche 1 bis 13 zur Herstellung eines Formkörpers ausgewählt aus der Gruppe bestehend aus Dekorelementen, insbesondere im Automobilinnenraum oder Modebereich, Sportartikeln, insbesondere Skischuhen, Zwischensohlen für Sportschuhe, Freizeitartikeln, Spielzeugen, insbesondere Konstruktionselementen, Bausteinen, Figuren oder Modellen, Haushaltsartikeln, insbesondere Behälter, Schüsseln, Schalen, Dosen, Bechern, Babyflaschen oder Trinkflaschen, Bauteilen von Küchengeräten, Bauteilen von Brillen, insbesondere Brillenrahmen oder Brillenbügeln, insbesondere für Sicherheitsbrillen, Sportbrillen oder Skibrillen, Möbelbeschlägen, Einlegesohlen, Bau- und Sichtteilen für Geräte im Sanitär-, Hygiene- und Kosmetikbereich, Teilen von Sicherheitsschuhen, insbesondere Kappen, Filtertassen, Schaugläsern, Durchflussmessern, Berstscheiben, Behältern, Gehäusen oder Gehäuseteilen für Elektro- und Elektronikgeräte, insbesondere für Rasierapparate, Epiliergeräte, Messgeräte, Infrarotschlüssel, Mobiltelefone, Abspielgeräte, Personal Digital Assistants (PDA), Smartphones oder Speichermedien, insbesondere USB-Sticks, Schutzhüllen für Mobiltelefone, Sichtteilen im Computer und Telekommunikationsbereich, Rohren, Schläuchen, Folien und Bauteilen von E-Zigaretten.

## Claims

1. Polyamide moulding compound comprising or consisting of components (A) to (D):
(A) 55 to 97% by weight of at least one amorphous copolyamide formed from the monomers (a1) to (a4):
(a1) 25 to 40% by mol of at least one acyclic, aliphatic diamine with 6 to 10 carbon atoms;
(a2) 10 to 25% by mol of at least one cycloaliphatic diamine with 6 to 36 carbon atoms;
(a3) 20 to 40% by mol of at least one aromatic dicarboxylic acid;
(a4) 10 to 30% by mol of at least one acyclic, aliphatic dicarboxylic acid with 8 to 16 carbon atoms;
the proportions of monomers (a1) and (a2) relating to the sum of the diamines used and adding up to 50% by mol, and the proportions of monomers (a3) and (a4) relating to the sum of the dicarboxylic acids used and adding up to 50% by mol;
(B) 3 to 22% by weight of at least one functionalised styrene-butadiene-styrene triblock copolymer;
(C) 0 to 15% by weight of at least one aliphatic, partially crystalline polyamide, selected from the group consisting of PA 6/12 and PA 612; and
(D) 0 to 8% by weight of at least one additive;
the quantity proportions of components (A) to (D) adding up to 100% by weight.

2. Polyamide moulding compound according to claim 1, **characterised in that**
the proportion of component (A) in the polyamide moulding compound is in the range of 61 to 97% by weight, preferably of 67 to 93% by weight and particularly preferably of 77% to 90.9% by weight, relative to the total weight of the polyamide moulding compound, and/or
the proportion of component (B) in the polyamide moulding compound is in the range of 3 to 20% by weight, preferably of 4 to 17% by weight, particularly preferably of 4 to 10% by weight, relative to the total weight of the polyamide moulding compound, and/or
the proportion of component (C) in the moulding compound is in the range of 0 to 13% by weight, preferably of 3 to 12% by weight and particularly preferably of 5 to 10% by weight, relative to the total weight of the polyamide moulding compound, and/or
the proportion of component (D) in the moulding compound is in the range of 0 to 6% by weight, preferably of 0 to 4% by weight and particularly preferably of 0.1 to 3% by weight, relative to the total weight of the polyamide moulding compound.

3. Polyamide moulding compound according to one of the preceding claims, **characterised in that**
• the haze of the polyamide moulding compound measured on a moulded article (2 mm thick plates with width and length: 60 x 60 mm) produced from the polyamide moulding compound, according to ASTM D1003, is at most 20%, preferably at most 15%, particularly preferably at most 10%, and/or
• the transparency measured on a moulded article (2 mm thick plates with width and length: 60 x 60 mm) produced from the polyamide moulding compound, according to ASTM D1003, is at least 80%, preferably at least 85% and particularly preferably at least 90%, and/or
• a moulded article produced from the polyamide moulding compound preferably has a modulus of elasticity in tension, determined according to ISO 527 of at least 1,500 MPa, preferably at least 1,700 MPa, particularly preferably at least 1,800 MPa; and/or
• a moulded article produced from the polyamide moulding compound has a notch impact strength, determined according to DIN EN ISO 179/2eA, of at least 18 kJ/m², preferably 21 kJ/m².

4. Polyamide moulding compound according to one of the preceding claims, **characterised in that**
• monomer (a1) is a linear or branched diamine with 6 to 8 carbon atoms, preferably 1,6-hexamethylenediamine and/or 2-methyl-1,5-pentanediamine, and/or
• monomer (a2) is a cycloaliphatic diamine with 12 to 20 carbon atoms, which is preferably selected from the group consisting of bis(4-amino-3-methylcyclohexyl)methane (MACM), bis(4-aminocyclohexyl)methane (PACM), 2,2-bis(4-aminocyclohexyl) propane (PACP), 2,2-bis(4-amino-3-methylcyclohexyl) propane (MACP), bis(4-amino-3-ethylcyclohexyl)methane (EACM), 2,2-bis(4-amino-3-ethylcyclohexyl) propane (EACP), bis(4-amino-3,5-bimethycyclohexyl)methane (TMACM), 2,2-bis(4-amino-3,5-dimethycyclohexyl)propane (TMACP) and mixtures thereof, bis(4-amino-3-methylcyclohexyl)methane (MACM), bis(4-aminocyclohexyl) methane (PACM) and mixtures thereof being particularly preferred, and/or
• monomer (a3) is an aromatic dicarboxylic acid with 6 to 36 carbon atoms, which is preferably selected from the group consisting of terephthalic acid (TPS), naphthalenedicarboxylic acid (NDA), including 1,5-naphthalenedicarboxylic acid and 2,6-naphthalenedicarboxylic acid, isophthalic acid (IPS), biphenyl dicarboxylic acids, preferably diphenyl-2,2'-dicarboxylic acid, 4,4'-diphenyldicarboxylic acid, 3,3'-diphenyldicarboxylic acid, 4,4'-diphenyl ether dicarboxylic acid, 4,4'-diphenylmethanedicarboxylic acid and 4,4'-diphenyl sulphone dicarboxylic acid, 1,5-anthracenedicarboxylic acid, p-terphenylene-4,4"-dicarboxylic acid and 2,5-pyridinedicarboxylic acid and mixtures thereof, terephthalic acid and isophthalic acid and mixtures thereof being particularly preferred, and/or
• monomer (a4) is an acyclic, linear or branched aliphatic dicarboxylic acid with 10 to 14 carbon atoms, which is selected preferably from the group consisting of decanedioic acid, undecanedioic acid, dodecanedioic acid, tridecanedioic acid, tetradecanedioic acid and mixtures thereof, particularly preferably being dodecanedioic acid and particularly preferably being exclusively dodecanedioic acid.

5. Polyamide moulding compound according to one of the preceding claims, **characterised in that** monomer (a3) is a mixture of terephthalic acid and isophthalic acid, preferably in a molar ratio of 2 : 1 to 1 : 2, particularly preferably in a ratio of 1.5 : 1 to 1 : 1.5, and highly preferably an equimolar mixture of terephthalic acid and isophthalic acid.

6. Polyamide moulding compound according to one of the preceding claims, **characterised in that**
• the proportion of monomer (a1) in the copolyamide is in the range of 27.5 to 40% by mol, preferably in the range of 30 to 38.5% by mol; and/or
• the proportion of monomer (a2) in the copolyamide is in the range of 10 to 22.5% by mol, preferably in the range of 11.5 to 20% by mol,
the proportions of monomers (a1) and (a2) relating to the sum of the diamines used and adding up to 50% by mol; and/or
• the proportion of monomer (a3) in the copolyamide is in the range of 25 to 40% by mol, preferably in the range of 30 to 37.5% by mol; and/or
• the proportion of monomer (a4) in the copolyamide is in the range of 10 to 25% by mol, preferably in the range of 12.5 to 20% by mol,
the proportions of monomers (a3) and (a4) relating to the sum of the dicarboxylic acids used and adding up to 50% by mol.

7. Polyamide moulding compound according to one of the preceding claims, **characterised in that**
• monomer (a1) is 1,6-hexamethylenediamine;
• monomer (a2) is selected from the group consisting of bis(4-amino-3-methylcyclohexyl)methane (MACM), bis(4-aminocyclohexyl)methane (PACM) and mixtures thereof, preferably as exclusively bis(4-amino-3-methylcyclohexyl)methane (MACM) ;
• monomer (a3) is selected from the group consisting of terephthalic acid, isophthalic acid and mixtures thereof, preferably a mixture in a ratio of 1.5 : 1 to 1 : 1.5, particularly preferably an equimolar mixture;
• monomer (a4) is dodecanedioic acid;
preferably the proportions of monomers being selected as follows:
• (a1) in the range of 30 to 37.5% by mol;
• (a2) in the range of 12.5 to 20% by mol;
• (a3) in the range of 30 to 37.5% by mol;
• (a4) in the range of 12.5 to 20% by mol;
the proportions of monomers (a1) and (a2) relating to the sum of the diamines used and adding up to 50% by mol, and the proportions of monomers (a3) and (a4) relating to the sum of the dicarboxylic acids used and adding up to 50% by mol.

8. Polyamide moulding compound according to one of the preceding claims, **characterised in that** component (B) is a linear triblock copolymer made of a butadiene block and two styrene blocks, the styrene proportion in the styrene-butadiene-styrene triblock copolymers being preferably of 25 to 53% by weight, particularly preferably of 30 to 48% by weight and very particularly preferably of 35% to 45% by weight.

9. Polyamide moulding compound according to one of the preceding claims, **characterised in that** component (B) is functionalised by copolymerisation and/or by grafting, for copolymerisation and/or grafting, preferably a compound selected from the group consisting of unsaturated carboxylic acids, unsaturated carboxylic acid derivatives and mixtures hereof and/or unsaturated glycidyl compounds, preferably a compound selected from the group consisting of unsaturated carboxylic acid esters, in particular acrylic acid esters and/or methacrylic acid esters, unsaturated carboxylic acid anhydrides, particularly preferably a compound selected from the group consisting of maleic anhydride, glycidylacrylic acid, glycidylmethacrylic acid, α-ethylacrylic acid, maleic acid, fumaric acid, itaconic acid, citraconic acid, aconitic acid, tetrahydrophthalic acid, butenylsuccinic acid and mixtures hereof, being used.

10. Polyamide moulding compound according to the preceding claim, **characterised in that**
• during copolymerisation of component (B), the weight proportion of each individual compound used for the copolymerisation is in the range of 3 to 20% by weight, preferably of 5 to 16% by weight and particularly preferably of 6 to 14% by weight, respectively relative to the total weight of component (B), and/or
• during grafting of component (B), the weight proportion of each individual compound used for the copolymerisation is in the range of 0.4 to 2.0% by weight, preferably of 0.6 to 1.6% by weight and particularly preferably of 0.8 to 1.4% by weight, respectively relative to the total weight of component (B).

11. Polyamide moulding compound according to one of the preceding claims, **characterised in that** component (C) is the copolyamide PA 6/12, formed from ε-caprolactam and 12-laurinlactam, preferably formed from 96 to 75% by mol of ε-caprolactam and 4 to 25% by mol of laurinlactam, particularly preferably from 94 to 80% by mol of ε-caprolactam and 6 to 20% by mol of laurinlactam, very particularly preferably from 92 to 82% by mol of ε-caprolactam and 8 to 18% by mol of 12-laurinlactam.

12. Polyamide moulding compound according to one of the preceding claims, **characterised in that** the additives (D) are selected from the group consisting of inorganic and organic stabilisers, in particular antioxidants, antiozonants, light-protection means, in particular UV stabilisers, UV absorbers or UV blockers, lubricants, colourants, marking means, pigments, carbon black, graphite, graphene, carbon nanotubes, photochromic agents, antistatic agents, mould-release means, condensation catalysts, chain regulators, defoamers, antiblocking means, chain-lengthening additives, optical brighteners, IR absorbers, NIR absorbers, halogen-containing flame retardants, halogen-free flame retardants, natural layer silicates, synthetic layer silicates, metallic pigments, metal flakes, metal-coated particles, particulate fillers, fibrous fillers, nanoscale fillers with a particle diameter (*d₉₅*) of at most 100 nm, determined by means of laser diffraction according to ISO 13320 (2009) and mixtures thereof.

13. Polyamide moulding compound according to claim 12, **characterised in that** the fibrous fillers are selected from the group consisting of glass fibres, carbon fibres, metal fibres, aramide fibres, plant fibres, cellulose fibres, in particular nanocellulose fibres, polymer fibres, whiskers, mineral fibres and mixtures hereof, preferably carbon fibres, metal fibres, aramide fibres, plant fibres, cellulose fibres, in particular nanocellulose fibres, polymer fibres, whiskers, mineral fibres and mixtures hereof

14. Moulded article producible according to one of the preceding claims.

15. Moulded article according to claim 14,
**characterised in that** the moulded article is selected from the group consisting of decorative elements, in particular in the automobile interior or fashion sphere, sports articles, in particular ski boots, midsoles for sports shoes, leisure articles, toys, in particular construction elements, components, figures or models, household articles, in particular containers, dishes, bowls, tins, beakers, baby bottles or drinking bottles, components of kitchen appliances, components of spectacles, in particular spectacle frames or spectacle sidepieces, in particular for safety goggles, sports goggles or ski goggles, furniture coverings, insoles, construction- and trim parts for appliances in the sanitary, hygiene and cosmetic field, parts for safety shoes, in particular caps, filter cups, inspection glasses, through-flow meters, bursting discs, containers, housings or housing parts for electrical and electronic appliances, in particular for shaving apparatus, depilators, measuring devices, infrared keys, mobile phones, players, personal digital assistants (PDA), smart phones or storage media, in particular USB sticks, protective covers for mobile phones, trim parts in the computer and telecommunication field, pipes, hoses, films and components of e-cigarettes.

16. Use of the polyamide moulding compounds according to one of the claims 1 to 13 for the production of a moulded article selected from the group consisting of decorative elements, in particular in the automobile interior or fashion sphere, sports articles, in particular ski boots, midsoles for sports shoes, leisure articles, toys, in particular construction elements, components, figures or models, household articles, in particular containers, dishes, bowls, tins, beakers, baby bottles or drinking bottles, components of kitchen appliances, components of spectacles, in particular spectacle frames or spectacle sidepieces, in particular for safety goggles, sports goggles or ski goggles, furniture coverings, insoles, construction- and trim parts for appliances in the sanitary, hygiene and cosmetic field, parts for safety shoes, in particular caps, filter cups, inspection glasses, through-flow meters, bursting discs, containers, housings or housing parts for electrical and electronic appliances, in particular for shaving apparatus, depilators, measuring devices, infrared keys, mobile phones, players, personal digital assistants (PDA), smart phones or storage media, in particular USB sticks, protective covers for mobile phones, trim parts in the computer and telecommunication field, pipes, hoses, films and components of e-cigarettes.

## Revendications

1. Mélange à mouler de polyamides contenant, ou en étant constitué, les composants (A) à (D)
(A) 55 à 97 % en poids d'au moins un copolyamide amorphe formé à partir des monomères (a1) à (a4) :
(a1) 25 à 40 % en moles d'au moins une diamine alicyclique aliphatique ayant 6 à 10 atomes de carbone ;
(a2) 10 à 25 % en moles d'au moins une diamine cycloaliphatique ayant 6 à 36 atomes de carbone ;
(a3) 20 à 40 % en moles d'au moins un acide dicarboxylique aromatique ;
(a4) 10 à 30 % en moles d'au moins un acide dicarboxylique acyclique aliphatique ayant 8 à 16 atomes de carbone ;
dans lequel les proportions des monomères (a1) et (a2) sont rapportées à la somme des diamines utilisées et se complètent à 50 % en moles, et les proportions des monomères (a3) et (a4) sont rapportées à la somme des acides dicarboxyliques utilisés et se complètent à 50 % en moles ;
(B) 3 à 22 % en poids d'au moins un copolymère tribloc styrène-butadiène-styrène fonctionnalisé ;
(C) 0 à 15 % en poids d'au moins un polyamide aliphatique partiellement cristallin, choisi dans le groupe consistant en PA 6/12 et PA 612 ; et
(D) 0 à 8 % en poids d'au moins un additif ;
la somme des proportions pondérales des composants (A) à (D) étant de 100 % en poids.

2. Mélange à mouler de polyamides selon la revendication 1, **caractérisé en ce que**
la proportion du composant (A) dans le mélange à mouler de polyamides est comprise dans la plage de 61 à 97 % en poids, de préférence de 67 à 93 % en poids et d'une manière particulièrement préférée de 77 à 90,9 % en poids, par rapport au poids total du mélange à mouler de polyamides, et/ou
la proportion du composant (B) dans le mélange à mouler de polyamides est comprise dans la plage de 3 à 20 % en poids, de préférence de 4 à 17 % en poids, d'une manière particulièrement préférée de 4 à 10 % en poids, par rapport au poids total du mélange à mouler de polyamides, et/ou
la proportion du composant (C) dans le mélange à mouler est comprise dans la plage de 0 à 13 % en poids, de préférence de 3 à 12 % en poids et d'une manière particulièrement préférée de 5 à 10 % en poids, par rapport au poids total du mélange à mouler de polyamides, et/ou
la proportion du composant (D) dans le mélange à mouler est comprise dans la plage de 0 à 6 % en poids, de préférence de 0 à 4 % en poids et d'une manière particulièrement préférée de 0,1 à 3 % en poids, par rapport au poids total du mélange à mouler de polyamides.

3. Mélange à mouler de polyamides selon l'une des revendications précédentes, **caractérisé en ce que**
• le trouble du mélange à mouler de polyamides, mesuré selon ASTM D1003 sur un objet moulé fabriqué à partir du mélange à mouler de polyamides (plaques de 2 mm d'épaisseur, avec une largeur et une longueur : 60 x 60 mm), est au maximum de 20 %, de préférence au maximum de 15 %, d'une manière particulièrement préférée au maximum de 10 % et/ou
• la transparence mesurée selon ASTM D1003 sur un objet moulé fabriqué à partir du mélange à mouler de polyamides (plaques de 2 mm d'épaisseur, avec une largeur et une longueur : 60 x 60 mm), est d'au moins 80 %, de préférence d'au moins 85 % et d'une manière particulièrement préférée d'au moins 90 % et/ou
• un objet moulé fabriqué à partir du mélange à mouler de polyamides présente un module d'élasticité en traction, déterminé selon ISO 527, d'au moins 1500 MPa, de préférence d'au moins 1700 MPa, d'une manière particulièrement préférée d'au moins 1800 MPa ; et/ou
• un objet moulé fabriqué à partir du mélange à mouler de polyamides présente une résistance au choc sur barreau entaillé, déterminée selon DIN EN ISO 179/2eA, d'eau moins 18 kJ/m², de préférence de 21 kJ/m².

4. Mélange à mouler de polyamides selon l'une des revendications précédentes, **caractérisé en ce que**
le monomère (a1) est une diamine linéaire ou ramifiée ayant 6 à 8 atomes de carbone, et est en particulier la 1,6-hexaméthylènediamine et/ou la 2-méthyl-1,5-pentanediamine, et/ou
le monomère (a2) est une diamine cycloaliphatique ayant 12 à 20 atomes de carbone, qui de préférence est choisie dans le groupe consistant en le bis-(4-amino-3-méthyl-cyclohexyl)-méthane (MACM), le bis-(4-amino-cyclohexyl)-méthane (PACM), le 2,2-bis-(4-amino-cyclohexyl)-propane (PACP), le 2,2-bis-(4-amino-3-méthyl-cyclohexyl)-propane (MACP), le bis-(4-amino-3-éthyl-cyclohexyl)-méthane (EACM), le 2,2-bis-(4-amino-3-éthyl-cyclohexyl)-propane (EACP), le bis-(4-amino-3,5-diméthyl-cyclohexyl)-méthane (TMACM), le 2,2-bis-(4-amino-3,5-diméthyl-cyclohexyl)-propane (TMACP) et les mélanges de ceux-ci, le bis-(4-amino-3-méthyl-cyclohexyl)-méthane (MACM), le bis-(4-amino-cyclohexyl)-méthane (PACM) et les mélanges de ceux-ci étant particulièrement préférés, et/ou
le monomère (a3) est un acide dicarboxylique aromatique ayant 6 à 36 atomes de carbone, qui de préférence est choisi dans le groupe consistant en l'acide téréphtalique (TPS), l'acide naphtalènedicarboxylique (NDA), y compris l'acide 1,5-naphtalènedicarboxylique et l'acide 2,6-naphtalènedicarboxylique, l'acide isophtalique (IPS), les acides biphényle-dicarboxyliques, de préférence l'acide biphényle-2,2'-dicarboxylique, l'acide 4,4'-diphényldicarboxylique, l'acide 3,3'-diphényldicarboxylique, l'acide 4,4'-diphénylétherdicarboxylique, l'acide 4,4'-diphénylméthanedicarboxylique et l'acide 4,4'-diphénylsulfonedicarboxylique, l'acide 1,5-anthracènedicarboxylique, l'acide p-terphénylène-4,4"-dicarboxylique et l'acide 2,5-pyridinedicarboxylique et les mélanges de ceux-ci, l'acide téréphtalique et l'acide isophtalique et les mélanges de ceux-ci étant particulièrement préférés, et/ou
le monomère (a4) est un acide dicarboxylique alicyclique, aliphatique linéaire ou ramifié ayant 10 à 14 atomes de carbone, qui de préférence est choisi dans le groupe consistant en l'acide décanedioïque, l'acide undécanedioïque, l'acide dodécanedioïque, l'acide tridécanedioïque, l'acide tétradécanedioïque et les mélanges de ceux-ci, l'acide dodécanedioïque étant particulièrement préféré, et d'une manière particulièrement préférée exclusivement l'acide dodécanedioïque.

5. Mélange à mouler de polyamides selon l'une des revendications précédentes, **caractérisé en ce que** le monomère (a3) est un mélange d'acide téréphtalique et d'acide isophtalique, de préférence selon un rapport en moles de 2:1 à 1:2, d'une manière particulièrement préférée selon un rapport de 1,5:1 à 1:1,5, et tout spécialement un mélange équimolaire d'acide téréphtalique et d'acide isophtalique.

6. Mélange à mouler de polyamides selon l'une des revendications précédentes, **caractérisé en ce que**
• la proportion du monomère (a1) dans le copolyamide est comprise dans la plage de 27,5 à 40 % en moles, de préférence dans la plage de 30 à 38,5 % en moles ; et/ou
• la proportion du monomère (a2) dans le copolyamide est comprise dans la plage de 10 à 22,5 % en moles, de préférence dans la plage de 11,5 à 20 % en moles ;
les proportions des monomères (a1) et (a2) étant rapportées à la somme des diamines utilisées et se complétant à 50 % en moles ;
et/ou
• la proportion du monomère (a3) dans le copolyamide est comprise dans la plage de 25 à 40 % en moles, de préférence dans la plage de 30 à 37,5 % en moles ; et/ou
• la proportion du monomère (a4) dans le copolyamide est comprise dans la plage de 10 à 25 % en moles, de préférence dans la plage de 12,5 à 20 % en moles ;
les proportions des monomères (a3) et (a4) étant rapportées à la somme des acides dicarboxyliques utilisés et se complétant à 50 % en moles.

7. Mélange à mouler de polyamides selon l'une des revendications précédentes, **caractérisé en ce que**
• le monomère (a1) est la 1,6-hexaméthylènediamine ;
• le monomère (a2) est choisi dans le groupe consistant en le bis-(4-amino-3-méthyl-cyclohexyl)-méthane (MACM), le bis-(4-amino-cyclohexyl)-méthane (PACM) et les mélanges de ceux-ci, de préférence exclusivement le bis-(4-amino-3-méthyl-cyclohexyl)-méthane (MACM) ;
• le monomère (a3) est choisi dans le groupe consistant en l'acide téréphtalique, l'acide isophtalique et les mélanges de ceux-ci, de préférence un mélange selon un rapport de 1,5:1 à 1:1,5, d'une manière particulièrement préférée un mélange équimolaire ;
• le monomère (a4) est l'acide dodécanedioïque ;
de préférence les proportions des monomères étant choisies comme suit :
• (a1) dans la plage de 30 à 37,5 % en moles ;
• (a2) dans la plage de 12,5 à 20 % en moles ;
• (a3) dans la plage de 30 à 37,5 % en moles ;
• (a4) dans la plage de 12,5 à 20 % en moles ;
les proportions des monomères (a1) et (a2) étant rapportées à la somme des diamines utilisées et se complétant à 50 % en moles, et les proportions des monomères (a3) et (a4) étant rapportées à la somme des acides dicarboxyliques utilisés et se complétant à 50 % en moles.

8. Mélange à mouler de polyamides selon l'une des revendications précédentes, **caractérisé en ce que** le composant (B) est un copolymère tribloc linéaire constitué d'un bloc butadiène et deux blocs styrène, la proportion du styrène dans les copolymères tribloc styrène-butadiène-styrène étant de préférence de 25 à 53 % en poids, d'une manière particulièrement préférée de 30 à 48 % en poids et d'une manière tout particulièrement préférée de 35 à 45 % en poids.

9. Mélange à mouler de polyamides selon l'une des revendications précédentes, **caractérisé en ce que** le composant (B) est fonctionnalisé par copolymérisation et/ou par greffage, en utilisant de préférence pour la copolymérisation et/ou le greffage un composé choisi dans le groupe consistant en les acides carboxyliques insaturés, les dérivés d'acides carboxyliques insaturés et les mélanges de ceux-ci, et/ou les composés glycidyliques insaturés, de préférence un composé choisi dans le groupe consistant en les esters d'acides carboxyliques insaturés, en particulier les esters de l'acide acrylique et/ou les esters de l'acide méthacrylique, les anhydrides carboxyliques insaturés, d'une manière particulièrement préférée un composé choisi dans le groupe consistant en l'anhydride maléique, l'acide glycidylacrylique, l'acide glycidylméthacrylique, l'acide α-éthylacrylique, l'acide maléique, l'acide fumarique, l'acide itaconique, l'acide citraconique, l'acide aconitique, l'acide tétrahydrophtalique, l'acide buténylsuccinique et les mélanges de ceux-ci.

10. Mélange à mouler de polyamides selon la revendication précédente, **caractérisé en ce que**
• lors de la copolymérisation du composant (B), la proportion pondérale de chaque composé individuel utilisé pour la copolymérisation est comprise dans la plage de 3 à 20 % en poids, de préférence de 5 à 16 % en poids et d'une manière particulièrement préférée de 6 à 14 % en poids, dans chaque cas par rapport au poids total du composant (B), et/ou
• lors du greffage du composant (B), la proportion pondérale de chaque composé individuel utilisée pour la copolymérisation est comprise dans la plage de 0,4 à 2,0 % en poids, de préférence de 0,6 à 1,6 % en poids et d'une manière particulièrement préférée de 0,8 à 1,4 % en poids, dans chaque cas par rapport au poids total du composant (B).

11. Mélange à mouler de polyamides selon l'une des revendications précédentes, **caractérisé en ce que** le composant (C) est le copolyamide PA6/12, formé à partir d'ε-caprolactame et de 12-lauryllactame, de préférence formé à partir de 96 à 75 % en moles d'ε-caprolactame et de 4 à 25 % en moles de lauryllactame, d'une manière particulièrement préférée de 94 à 80 % en moles d'ε-caprolactame et de 6 à 20 % en moles de lauryllactame, d'une manière tout particulièrement préférée de 92 à 82 % en moles d'ε-caprolactame et de 8 à 18 % en moles de 12-lauryllactame.

12. Mélange à mouler de polyamides selon l'une des revendications précédentes, **caractérisé en ce que** les additifs (D) sont choisis dans le groupe consistant en les stabilisants inorganiques et organiques, en particulier les antioxydants, les antiozonants, les agents de protection contre la lumière, en particulier les stabilisants UV, les agents absorbant les UV ou bloquant les UV, les lubrifiants, les colorants, les agents de marquage, les pigments, le noir de carbone, le graphite, le graphène, les nanotubes de carbone, les agents photochromes, les antistatiques, les agents de démoulage, les catalyseurs de condensation, les régulateurs de chaîne, les antimoussants, les agents anti-adhérence de contact, les additifs d'extension de chaîne, les azurants optiques, les agents absorbant les IR, les agents absorbant les NIR, les agents d'ignifugation halogénés, les agents d'ignifugation non halogénés, les phyllosilicates naturels, les phyllosilicates synthétiques, les pigments métalliques, les paillettes métalliques, les particules enrobées de métaux, les charges particulaires, les charges fibreuses, les charges nanométriques ayant une granulométrie (*d₉₅*) au maximum de 100 nm, déterminée par diffraction laser selon ISO 13320 (2009), et les mélanges de ceux-ci.

13. Mélange à mouler de polyamides selon la revendication 12, **caractérisé en ce que** les charges fibreuses sont choisies dans le groupe consistant en les fibres de verre, les fibres de carbone, les fibres métalliques, les fibres aramides, les fibres végétales, les fibres de cellulose, en particulier les nanofibres de cellulose, les fibres polymères, les trichites, les fibres minérales et les mélanges de celles-ci, de préférence les fibres de carbone, les fibres métalliques, les fibres aramides, les fibres végétales, les fibres de cellulose, en particulier les nanofibres de cellulose, les fibres polymères, les trichites, les fibres minérales et les mélanges de celles-ci.

14. Objet moulé pouvant être fabriqué à partir d'un mélange à mouler de polyamides selon l'une des revendications précédentes.

15. Objet moulé selon la revendication 14, **caractérisé en ce que** l'objet moulé est choisi dans le groupe consistant en les éléments décoratifs, en particulier dans l'habitacle intérieur des automobiles ou dans le domaine de la mode, les articles de sport, en particulier les chaussures de ski, les semelles intérieures pour chaussures de sport, les articles de loisirs, les jouets, en particulier les éléments de construction, les agglomérés, les figures ou modèles, les articles ménagers, en particulier les récipients, les plats, les cuvettes, les boîtes, les gobelets, les biberons ou les bidons, les composants de matériels de cuisine, les composants de lunettes, en particulier les montants de lunettes ou les branches de lunettes, en particulier pour des lunettes de sécurité, des lunettes de sport ou des lunettes de ski, des ferrures de meubles, des semelles premières, des composants de construction et éléments visibles pour appareils dans les domaines sanitaire, hygiénique et cosmétique, les parties de chaussures de sécurité, en particulier les contreforts, les filtres à eau, les regards, les débitmètres, les plaques de rupture, les récipients, les boîtiers ou éléments de boîtier pour appareils électriques et électroniques, en particulier pour les rasoirs, les épilateurs, les appareils de mesure, les clés infrarouges, les téléphones mobiles, les liseuses, les assistants personnels (PDA), les smartphones ou les supports de mémoire, en particulier les clés USB, les gaines de protection pour téléphones mobiles, les pièces visibles dans le domaine des ordinateurs et des télécommunications, les tubes, les tuyaux flexibles, les feuilles et les composants de cigarettes électroniques.

16. Utilisation des mélanges à mouler de polyamides selon l'une des revendications 1 à 13, pour la fabrication d'un objet moulé choisi dans le groupe consistant en les éléments décoratifs, en particulier dans l'habitacle intérieur des automobiles ou dans le domaine de la mode, les articles de sport, en particulier les chaussures de ski, les semelles intérieures pour chaussures de sport, les articles de loisirs, les jouets, en particulier les éléments de construction, les agglomérés, les figures ou modèles, les articles ménagers, en particulier les récipients, les plats, les cuvettes, les boîtes, les gobelets, les biberons ou les bidons, les composants de matériels de cuisine, les composants de lunettes, en particulier les montants de lunettes ou les branches de lunettes, en particulier pour des lunettes de sécurité, des lunettes de sport ou des lunettes de ski, des ferrures de meubles, des semelles premières, des composants de construction et éléments visibles pour appareils dans les domaines sanitaire, hygiénique et cosmétique, les parties de chaussures de sécurité, en particulier les contreforts, les filtres à eau, les regards, les débitmètres, les plaques de rupture, les récipients, les boîtiers ou éléments de boîtier pour appareils électriques et électroniques, en particulier pour les rasoirs, les épilateurs, les appareils de mesure, les clés infrarouges, les téléphones mobiles, les liseuses, les assistants personnels (PDA), les smartphones ou les supports de mémoire, en particulier les clés USB, les gaines de protection pour téléphones mobiles, les pièces visibles dans le domaine des ordinateurs et des télécommunications, les tubes, les tuyaux flexibles, les feuilles et les composants de cigarettes électroniques.
